(19) Europäisches Patentamt
European Patent Office
Office européen des brevets

(11) **EP 4 625 341 A1**

(12) **EUROPEAN PATENT APPLICATION**

(43) Date of publication:
**01.10.2025 Bulletin 2025/40**

(21) Application number: **24205831.1**

(22) Date of filing: **10.10.2024**

(51) International Patent Classification (IPC):
*G06T 17/20* *(2006.01)*

(52) Cooperative Patent Classification (CPC):
**G06T 17/205**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2024 IN 202411023963**

(71) Applicant: **FUJITSU LIMITED**
**Kawasaki-shi, Kanagawa 211-8588 (JP)**

(72) Inventors:
• **KHAN, Ainulla**
  **560037 Bangalore (IN)**
• **CHIKANE, Abhishek Rajendra**
  **560037 Bangalore (IN)**

(74) Representative: **Haseltine Lake Kempner LLP**
**Cheapside House**
**138 Cheapside**
**London EC2V 6BJ (GB)**

(54) **MESH REFINEMENT**

(57) A computer-implemented method comprising: generating a main graph based on a coarse mesh, the coarse mesh comprising a plurality of mesh elements arranged to fill an area or volume defined by a geometry; generating a vertex graph based on the geometry, wherein the vertex graph comprises vertex graph nodes corresponding to vertices of the area or volume defined by the geometry and vertex graph edges corresponding to links between the vertices in the geometry; generating, using a first graph neural network (GNN), an embedding of the vertex graph; generating, using a second GNN and based on the main graph and the embedding of the vertex graph, a prediction indicative of a refinement of the coarse mesh for generating a refined mesh.

| S91 | Generate main graph based on coarse mesh |
| --- | --- |
| S92 | Generate vertex graph based on geometry |
| S93 | Generate, using first GNN, embedding of vertex graph |
| S94 | Generate, using second GNN and based on the embedding and the main graph, a prediction indicative of a refinement of the coarse mesh |

FIGURE 18

**Description**

The present invention relates to mesh refinement, and in particular to a computer-implemented method, a computer program, and an information programming apparatus.

In many fields, such as structural mechanics, aerospace, geophysics, and acoustics, physics simulation is a crucial tool, allowing for the exploration of phenomena that are otherwise challenging to study directly. For these applications, simulations rely on mathematical models represented mainly using partial differential equations (PDEs). These PDEs are solved on a specific geometric domain using Finite Element Method (FEM) (Abdelaziz Y., Nabbou A., Hamouine A.: A state-of-the art review of the x-fem for computational fracture mechanics, Applied Mathematical Modelling 33, 4269-4282 (2009)).

Meshing is the initial step in FEM, wherein a physical structure is discretized into a mesh of finite elements. Each element represents a segment of the overall behavior of the structure. The method involves solving PDEs to provide the Finite Element (FE) solution by utilizing mesh of the structure. The effectiveness of FEM highly depends on the mesh quality. The mesh needs to be sufficiently detailed to capture critical structural behaviors, however finer meshes yield longer computations. Therefore, mesh refinement methods focus on generating a refined or "optimal" mesh, where only specific regions with simulation errors are refined for improving the simulation accuracy.

In other words, in simulations, an optimal mesh plays a very important role and it affects many parameters. For example:

- Accuracy of Results: An optimal mesh may ensures the finite element model accurately represents the structure, which is crucial for precise stress and strain calculations.
- Computational Efficiency: An optimal mesh may elements and nodes for faster computations (compared to a fine mesh), saving time and resources in large-scale or iterative simulations.
- Handling Complex Geometries: An optimal mesh has adjusted mesh density compared to a coarse mesh in areas of high stress or complexity for more accurate behavior capture.
- Improved Interpretation of Results: Use of an optimal mesh may lead to clearer results interpretation, by identifying critical areas and enhancing confidence in simulation outcomes.

Despite the above points, optimal mesh generation is a difficult and time-consuming process.

According to an embodiment of a first aspect there is disclosed herein a computer-implemented method comprising: generating a main graph based on a coarse mesh, the coarse mesh comprising a plurality of (first) mesh elements arranged to fill an area or volume defined by a geometry/boundary (the main graph comprising main graph nodes and main graph edges defining the (first) mesh elements); generating a vertex graph based on the geometry/boundary, wherein the vertex graph comprises vertex graph nodes corresponding to vertices of the area or volume defined by the geometry/boundary and vertex graph edges corresponding to links between the vertices in the geometry/boundary; generating, using a first graph neural network (GNN), an embedding of the vertex graph; generating, using a second GNN and based on the main graph and the embedding of the vertex graph, a prediction indicative of a refinement of the coarse mesh (required) for generating a refined/optimal mesh (comprising a plurality of second mesh elements arranged to fill the area or volume defined by the geometry/boundary).

The prediction may comprise a predicted error.

The computer-implemented method may comprise comparing the predicted error to a ground truth error and adjusting at least one weight of the first and/or second GNN based on the comparison, and the ground truth error may comprise an error/difference between a simulation result obtained using the coarse mesh and a simulation result obtained using a fine mesh.

The prediction may comprise a predicted error and the computer-implemented method may comprise comparing the predicted error to a ground truth error and adjusting at least one weight of the first and/or second GNN based on the comparison, and the ground truth error may comprise an error/difference between a simulation result obtained using the coarse mesh and a simulation result obtained using a fine mesh

The fine mesh may comprise a greater number of mesh elements than the coarse mesh (and the refined mesh).

The fine mesh may comprise a plurality of third mesh elements arranged to fill the area or volume defined by the geometry/boundary.

Comparing the predicted error to the ground truth error may comprise computing a loss between/based on the predicted error and the ground truth error, and wherein adjusting the at least one weight of the first and/or second GNN based on the comparison may comprise adjusting the at least one weight to reduce/minimize the loss.

Computing the loss may comprise computing the L1 loss function between the predicted error and the ground truth error.

The prediction may comprise a per-node predicted error per (for each) coarse mesh node of the coarse mesh (or main graph node of the main graph).

The ground truth error may comprise a per-node ground truth error per (for each) coarse mesh node of the coarse mesh (or main graph node of the main graph).

Computing the loss may comprise computing an average of per-node losses between corresponding per-node predicted errors and per-node ground truth errors.

Computing the loss may comprise computing the L1 loss function between the predicted error and the ground truth error across the main graph nodes of the main graph.

Computing the loss may comprise computing the L1 loss function between the per-node predicted errors and the per-node ground truth errors.

The computer-implemented method may comprise obtaining the ground truth error by performing a simulation using the coarse mesh and performing a simulation using the fine mesh, and comparing results of the simulations to determine the error/difference between the results of the simulations.

The computer-implemented method may comprise iterating the comparing the predicted error to the ground truth error and the adjusting at least one weight of the first and/or second GNN until the comparison indicates a loss threshold is met or until the comparison indicates loss convergence or until a threshold number of iterations have been performed.

The first and second GNNs after having at least one weight adjusted may be trained first and second GNNs, and the computer-implemented method may comprise using the trained first and second GNNs for refinement of a target coarse mesh to generate a refined mesh.

The first and second GNNs after having at least one weight adjusted may be trained first and second GNNs, and the computer-implemented method may comprise: using the trained first and second GNNs to generate a prediction indicative of a refinement of a target coarse mesh for generating a refined mesh; and refining the target coarse mesh based on the prediction to obtain the refined mesh.

The first and second GNNs after having at least one weight adjusted may be trained first and second GNNs, and the computer-implemented method may comprise: generating a target main graph based on a target coarse mesh, the target coarse mesh comprising a plurality of (first) mesh elements arranged to fill an area or volume defined by a geometry/boundary (the target main graph comprising main graph nodes and main graph edges defining the (first) mesh elements); generating a target vertex graph based on the geometry/boundary, wherein the target vertex graph comprises vertex graph nodes corresponding to vertices of the area or volume defined by the geometry/boundary and vertex graph edges corresponding to links between the vertices in the geometry/boundary; generating, using the trained first GNN, an embedding of the target vertex graph; generating, using the trained second GNN and based on the target main graph and the embedding of the target vertex graph, a prediction indicative of a refinement of the target coarse mesh (required) for generating a refined/optimal mesh; and refining the target coarse mesh based on the prediction to obtain the refined mesh.

The computer-implemented method may comprise refining the coarse mesh based on the prediction to obtain a refined mesh.

Refining the coarse mesh may comprise adjusting a mesh size (or element size).

Refining the coarse mesh may comprise refining the coarse mesh in a region of the coarse mesh by an amount based on the value of the prediction at that region.

The prediction may comprise a per-node predicted error per (for each) coarse mesh node of the coarse mesh (or main graph node of the main graph).

Refining the coarse mesh may comprise refining the coarse mesh in a region of a coarse mesh node (by an amount) based on the per-node predicted error for the coarse mesh node.

Refining the coarse mesh may comprise refining the coarse mesh in each region of the coarse mesh (by an amount) based on the per-node predicted errors for the coarse mesh nodes in the region.

The computer-implemented method may comprise computing a simulation using the refined mesh.

The computer-implemented method may comprise using the refined mesh to model a physical component.

The computer-implemented method may comprise using the refined mesh to model a physical component of any of a building, an automobile, a biomechanical or physiological system, and an aircraft.

The first and second GNNs may be trained GNNs which have been trained using a training process.

The first and second GNNs may be trained GNNs are trained GNNs and the computer-implemented method may comprise performing a training process to train initial first and second GNNs to obtain the trained first and second GNNs, the training process comprising: using the initial first and second GNNs to generate a prediction indicative of refinement of a training coarse mesh, wherein the prediction comprises a predicted error; and comparing the predicted error to a ground truth error and adjusting at least one weight of the initial first and/or second GNN based on the comparison, wherein the ground truth error comprises an error/difference between a simulation result obtained using the training coarse mesh and a simulation result obtained using a fine mesh.

The first and second GNNs may be trained GNNs are trained GNNs and the computer-implemented method may comprise performing a training process to train initial first and second GNNs to obtain the trained first and second GNNs, the training process comprising: generating a training main graph based on a training coarse mesh, the training coarse mesh comprising a plurality of (first) mesh elements arranged to fill an area or volume defined by a geometry/boundary (the training main graph comprising main graph nodes and main graph edges defining the (first) mesh elements); generating a training vertex graph based on the geometry/-

boundary, wherein the training vertex graph comprises vertex graph nodes corresponding to vertices of the area or volume defined by the geometry/boundary and vertex graph edges corresponding to links between the vertices in the geometry/boundary; generating, using the initial first GNN, an embedding of the training vertex graph; generating, using the initial second GNN and based on the training main graph and the embedding of the training vertex graph, a prediction indicative of a refinement of the training coarse mesh (required) for generating a training refined/optimal mesh (comprising a plurality of second mesh elements arranged to fill the area or volume defined by the geometry/boundary), wherein the prediction comprises a predicted error; and comparing the predicted error to a ground truth error and adjusting at least one weight of the initial first and/or second GNN based on the comparison, wherein the ground truth error comprises an error/difference between a simulation result obtained using the training coarse mesh and a simulation result obtained using a fine mesh.

The coarse mesh may comprise coarse mesh nodes and coarse mesh edges defining the elements of the coarse mesh (wherein the coarse mesh nodes may define/correspond to vertices of the elements of the coarse mesh and the coarse mesh edges may define/-correspond to edges of the elements of the coarse mesh).

The main graph nodes and main graph edges may correspond to the coarse mesh nodes and coarse mesh edges, respectively.

Generating the vertex graph may comprise generating a per-node vertex graph per (for each) coarse mesh node, wherein each per-node vertex graph may be a plurality of per-node vertex graph nodes corresponding respectively to the vertices.

The coarse mesh may comprise coarse mesh nodes and coarse mesh edges defining the elements of the coarse mesh (wherein the coarse mesh nodes may define/correspond to vertices of the elements of the coarse mesh and the coarse mesh edges may define/-correspond to edges of the elements of the coarse mesh) and generating the vertex graph may comprise generating a per-node vertex graph per (for each) coarse mesh node, wherein each per-node vertex graph may comprise a plurality of per-node vertex graph nodes corresponding respectively to the vertices.

Each per-node vertex graph node may comprise geometric information relating to the coarse mesh node corresponding to the per-node vertex graph and the vertex corresponding to the per-node vertex graph node.

Each per-node vertex graph may comprise a plurality of per-node vertex graph edges corresponding respectively to the links between the vertices in the geometry.

The geometric information may comprise at least one of: mean value coordinates of the vertex concerned for the coarse mesh node concerned; a number of hops between the vertex concerned and the coarse mesh node concerned; the vertex closest to the coarse mesh node concerned among the vertices; boundary condition information for the vertex concerned; parameters related to a simulation for which the refined mesh is to be used.

Each per-node vertex graph node may comprise geometric information relating to the coarse mesh node corresponding to the per-node vertex graph and the vertex corresponding to the per-node vertex graph node, and the geometric information may comprise at least one of: mean value coordinates of the vertex concerned for the coarse mesh node concerned; a number of hops between the vertex concerned and the coarse mesh node concerned; the vertex closest to the coarse mesh node concerned among the vertices; boundary condition information for the vertex concerned; parameters related to a simulation for which the refined mesh is to be used.

Generating the embedding of the vertex graph may comprise generating per-node embeddings of the per-node vertex graphs and combining the per-node embeddings to generate the embedding of the vertex graph.

The per-node vertex graphs may be subgraphs of the vertex graph.

The first GNN may comprise at least one multi-layer perceptron layer.

The second GNN may comprise a residual-layers-based architecture.

The second GNN may comprise at least one multi-layer perceptron layer.

The first and/or second GNN may comprise at least one multi-layer perceptron layer and the second GNN may comprise a residual-layers-based architecture.

According to an embodiment of a second aspect there is disclosed herein a computer program which, when run on a computer, causes the computer to carry out a method comprising: generating a main graph based on a coarse mesh, the coarse mesh comprising a plurality of (first) mesh elements arranged to fill an area or volume defined by a geometry/boundary (the main graph comprising main graph nodes and main graph edges defining the (first) mesh elements); generating a vertex graph based on the geometry/boundary, wherein the vertex graph comprises vertex graph nodes corresponding to vertices of the area or volume defined by the geometry/-boundary and vertex graph edges corresponding to links between the vertices in the geometry/boundary; generating, using a first graph neural network (GNN), an embedding of the vertex graph; generating, using a second GNN and based on the main graph and the embedding of the vertex graph, a prediction indicative of a refinement of the coarse mesh (required) for generating a refined/optimal mesh (comprising a plurality of second mesh elements arranged to fill the area or volume defined by the geometry/boundary).

According to an embodiment of a third aspect there is disclosed herein an information processing apparatus comprising a memory and a processor connected to the memory, wherein the processor is configured to: generate a main graph based on a coarse mesh, the coarse mesh comprising a plurality of (first) mesh elements arranged to fill an area or volume defined by a geometry/boundary (the main graph comprising main graph nodes and main graph edges defining the (first) mesh elements); generate a vertex graph based on the geometry/boundary, wherein the vertex graph comprises vertex graph nodes corresponding to vertices of the area or volume defined by the geometry/boundary and vertex graph edges corresponding to links between the vertices in the geometry/boundary; generate, using a first graph neural network (GNN), an embedding of the vertex graph; generate, using a second GNN and based on the main graph and the embedding of the vertex graph, a prediction indicative of a refinement of the coarse mesh (required) for generating a refined/optimal mesh (comprising a plurality of second mesh elements arranged to fill the area or volume defined by the geometry/boundary).

Features relating to any aspect/embodiment may be applied to any other aspect/embodiment.

Reference will now be made, by way of example, to the accompanying drawings, in which:

Figure 1 is a diagram useful for understanding mesh refinement;
Figure 2 is a diagram illustrating approaches to mesh refinement;
Figure 3 is a diagram illustrating a comparative method;
Figure 4 is a diagram illustrating a comparative method;
Figure 5 is a diagram illustrating a method;
Figure 6 is a diagram useful for understanding vertex and main graphs;
Figure 7 is a diagram useful for understanding vertex and main graphs;
Figure 8 is a flowchart illustrating a method;
Figure 9 is a flowchart illustrating a method;
Figure 10 is a flowchart illustrating a method;
Figure 11 is a flowchart illustrating a method;
Figure 12 is a diagram illustrating a method;
Figure 13 is a diagram useful for understanding mesh refinement;
Figure 14 is a diagram illustrating a method;
Figure 15 is a diagram useful for understanding boundary conditions;
Figure 16 is a diagram useful for understanding boundary conditions;
Figure 17 is a diagram useful for understanding boundary conditions;
Figure 18 is a flowchart illustrating a method;
Figure 19 is a flowchart illustrating a method;
Figure 20 is a flowchart illustrating a method;
Figure 21 is a graph;
Figure 22 is a number of graphs;
Figure 23 is a number of graphs;
Figure 24 is a table;
Figure 25 is a number of graphs;
Figure 26 is a number of graphs;
Figure 27 is a number of graphs;
Figure 28 is a number of graphs; and
Figure 29 is a diagram illustrating an apparatus.

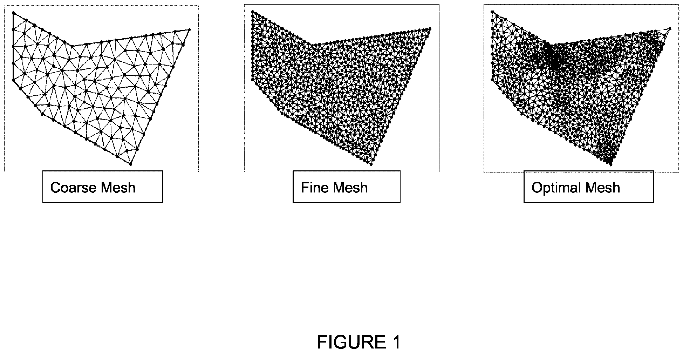

Figure 1 illustrates an example of a coarse mesh, a fine mesh, and a refined or "optimal" mesh. It will be appreciated that a refined mesh is not necessarily a completely optimal mesh, i.e., that further refinement could usually be carried out on a refined mesh to obtain a "more" optimal mesh. However, the term "optimal mesh" is used herein interchangeably with refined mesh, to refer to a mesh that has been refined to the point of being considered in the context of a particular methodology/-model to be "optimal".

A traditional mesh refinement method involves a multi-step process: initially generating coarse meshes for the geometry, followed by computing the FE solution on these initial meshes. Subsequently, a posteriori error estimation is conducted to refine the mesh elements in high-error regions. These steps repeat until the mesh meets the user's specified tolerance. Despite its effectiveness in generating non-uniform meshes, this traditional method is computationally intensive because of the repeated execution of complex error estimation step.

That is, the traditional mesh refinement may be summarized as:

- Initial Meshing: Create an initial coarse mesh, considering areas needing detail.

- Analysis and Identification: Check for issues like element size and distortion.

- Refinement and Coarsening: Adjust mesh density where necessary for accuracy and efficiency.

- Quality Checks: Ensure mesh meets criteria for aspect ratio, skewness, and size variation.

- Iterative Improvement: Use simulation results to refine the mesh iteratively.

Neural networks may be used to automate meshing for a quicker and user intuitive mesh generation. That is, efforts have been made to focus on mesh generation using AI to make the process more efficient in terms of time and computations.

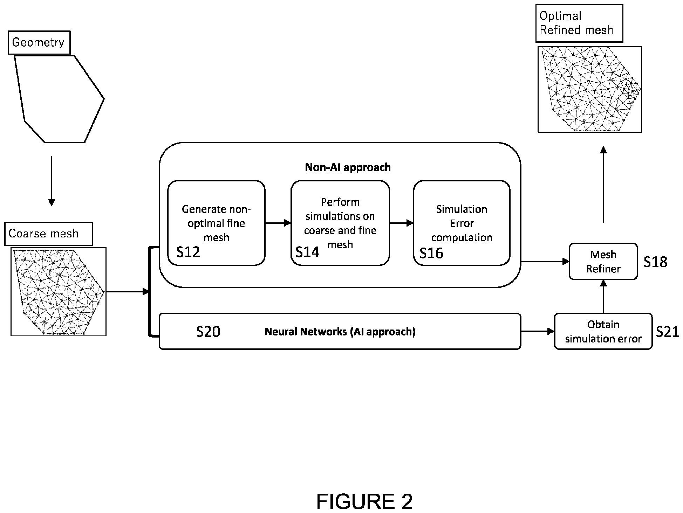

Figure 2 illustrates broadly the differences between a non-AI approach and an AI approach for mesh generation. In both cases, a coarse mesh is generated based on a geometry which defines an area or volume to be "meshed". In the non-AI approach, step S12 comprises generating a non-optimal fine mesh, step S14 comprises performing simulations on the coarse and fine meshes, and step S16 comprises computing simulation errors (between the coarse and fine mesh simulations).

Common to both the AI and non-AI approach, step S18 comprises refining the coarse mesh based on the simulation error to generate an optimal refined mesh. The non-AI approach may be considered to correspond to the traditional approach outline above. The AI approach comprises using neural networks to automate the non-AI steps, and step S21 comprises obtaining a prediction of the simulation error based on the neural network output. This predicted simulation error is used in the step S18 to refine the coarse mesh to generate the optimal refined mesh.

Comparative methods for mesh generation/refinement using neural networks require explicit inclusion of geometric features and hence cannot generalize to new geometry. For example, following are the steps for mesh generation using AI in a comparative method:

- Provide an input geometry for the simulation
- Generate a coarse mesh for the geometry using existing simulation software
- Predict the optimal areas using neural network (NN) model
- Refine the mesh based on the predicted optimal areas in the required regions

Among the above steps, neural networks may be used to predict the optimal areas while the simulation software generates the input coarse mesh and refines the same using the predicted optimal areas using mesh refiner. Predicting the optimal areas corresponds to predicting the simulation error. "Optimal areas" may be considered areas in need of refinement due to a large comparative simulation error and may be referred to as characteristic areas/regions.

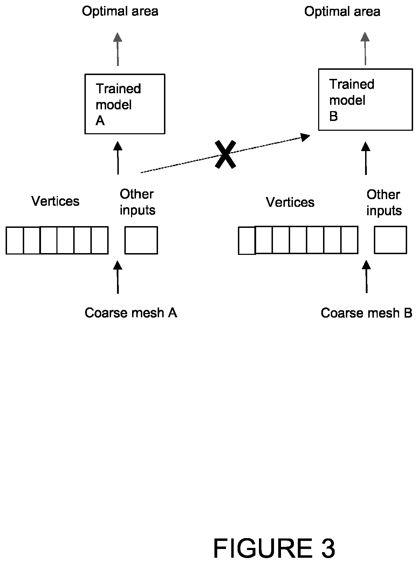

Figure 3 is a diagram useful for understanding a comparative method 1. Comparative method 1 may be referred to herein as MeshingNet (Zhang Z., et al.: MeshingNet: a new mesh generation method based on deep learning, In: International conference on computational science, pp. 186-198. Springer, Berlin (2020)) and performs Mesh optimization for 2D geometries using neural networks, specifically, using polygon vertices, coarse mesh, and boundary conditions to predict optimal areas of mesh elements to optimize the finite element mesh. MeshingNet comprises a supervised neural network-based method for mesh optimization. Optimal areas are predicted by taking in the input coarse mesh and then a mesh refiner is used to refine the mesh as per predicted optimal areas.

- Model input: Coarse mesh polygon vertices, boundary conditions, element coordinates as input features, PDE parameters
- Model output: Optimal areas

MeshingNet's approach uses Triangle software (Shewchuk, J.R.: Delaunay refinement algorithms for triangular mesh generation, Computational geometry 22(1-3), 21-74 (2002)) for dataset generation, which involves Delaunay-based mesh refinement.

Figure 3 illustrates a situation in which a model trained using MeshingNet on geometries with 6 vertices, referred to as "trained model A", is used to find optimal areas on a coarse mesh A, and a model trained using MeshingNet on geometries with 7 vertices, referred to as "trained model B", is used to find optimal areas on a coarse mesh B. Coarse mesh A is a coarse mesh for a geometry with 6 vertices and coarse mesh B is a coarse mesh for a geometry with 7 vertices.

Trained model A cannot be used to find the optimal areas for coarse mesh B because the model A has been trained on geometries with 6 vertices. When presented with geometries with different numbers of vertices, the model will not work as the input dimensions are different. The trained model B needs to be obtained by training a model with 7-vertex geometries to process coarse mesh B. This is indicated by the arrow with a cross through it in Figure 3.

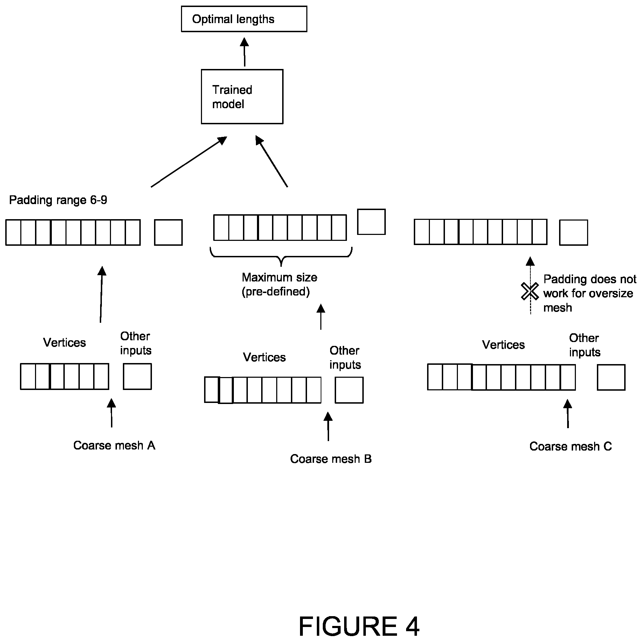

Figure 4 is a diagram useful for understanding a comparative method 2. Comparative method 2 may be referred to herein as GMR-Net (Minseong K., et al..: GMR-Net: GCN-based mesh refinement framework for elliptic PDE problems, Engineering with Computers 39, 3721-3737 (2023)) and estimates Mesh optimization for 2D geometries using graph neural networks (GNNs). Specifically, GMR-Net uses padding to get fixed dimensions for polygon vertices, coarse mesh, and PDE parameters to predict edge length of triangular mesh elements by learning local error density. That is, GMR-Net comprises a GNN-based mesh optimization approach, which involves estimating target edge length of mesh elements by learning local error density using graph neural networks. GMR-Net leverages supervised learning specifically for elliptic PDEs.

- Model input: coarse mesh with the polygon vertices, boundary conditions, other parameters, PDE parameters
- Model output: Target edge length

Figure 4 illustrates a situation in which a model trained using GMR-Net is used to find optimal areas for coarse meshes A and B. Coarse meshes A and B have different numbers of geometry vertices but within the range 6-9. The trained model is able to work with coarse meshes having geometry vertices within the range 6-9 due to the "padding" in the input vectors. However, the trained model is not able to compute optimal areas for coarse mesh C which has 10 geometry vertices.

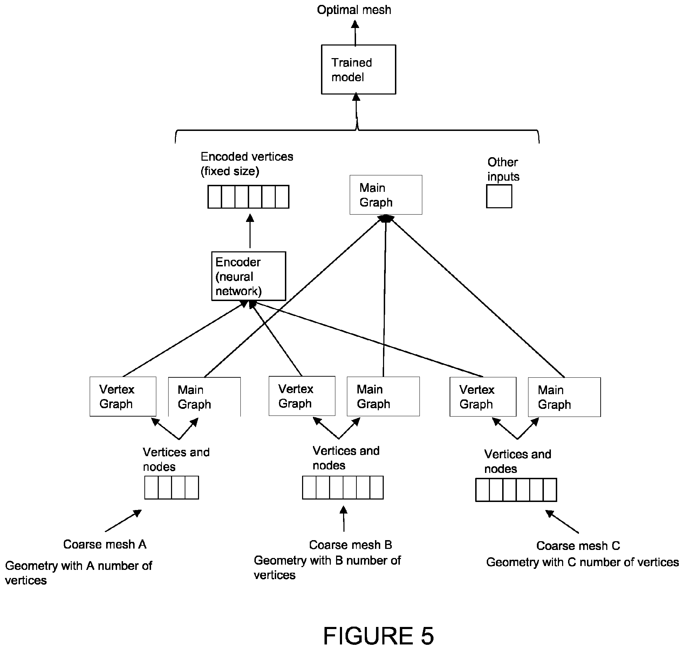

There is disclosed herein an approach to strategize geometric generalization in mesh optimization (may be referred to as refinement) for arbitrary shapes using graph neural networks without retraining. Figure 5 illustrates a framework for mesh optimization. The framework comprises the following operations:

- For any given geometry, generate a coarse mesh using existing software.
- Form 2 different graph structures to represent a coarse mesh (Main graph) and the shape of the geometry (vertex graph)
- By using graph neural networks (GNNs), extract fixed size embedding from vertex graph to represent the shape of the geometry
- Concatenate these fixed size embedding features to Main graph so that model will have information of the mesh as well as the shape of the geometry.

Figure 5 shows three different coarse meshes A, B, and C, with different numbers of vertices in their geometries, being processed under this framework, where in each case a vertex graph and a main graph is generated, an encoder extracts an embedding from the vertex graph, and the embedding and main graph are fed into a trained model to generated an optimal mesh. It is noted that the vertex graphs and main graphs from the different meshes are not combined, and the illustration of single instances of the inputs to the trained model is for brevity. The other inputs may comprise, e.g., boundary conditions or PDE parameters. The encoder may utilize GNN features and may be considered part of the trained model though illustrated separately. An objective of the Figure 5 framework mesh optimization for arbitrary shapes without retraining. The "vertices and nodes" label in Figure 5 may refer to the vertices of the geometry concerned upon which the vertex graph is based and the nodes of the coarse mesh concerned upon which the main graph is based.

Advantages of the Figure 5 framework include:

- Capable of refining mesh for polygons with any number of edges for geometric generalization
- Refine meshes on unseen geometries without re-training
- Improvement of mesh refinement with low(er) computation time

Some method steps used in the Figure 5 framework about graph generation based on a given coarse mesh are described in more detail:

- Form separate graphs from input geometry and the coarse mesh: vertex graph and main graph.
- Vertex graph: This graph represents the outer geometry of the input coarse mesh. Here, each vertex of the polygon becomes a node, and edges are formed by connecting vertices. A vertex graph may be formed for each node in the input coarse mesh. The vertex graphs for the respective nodes may be considered sub-graphs of an overall vertex graph.
- Main graph: This graph represents the coarse mesh. It may be constructed by connecting the centroids of each polygon element and edges may be formed using Delaunay triangulation. The main graph may be generated using the nodes in the coarse mesh - this may be considered using the coarse mesh as the main graph (that is, the nodes of the coarse mesh define the vertices of the elements of the mesh, and the edges in the coarse mesh define the sides of the mesh elements, and the main graph may be generated using these nodes and edges).

For generalization over any geometry of the input geometry, the vertex graph is useful. The vertex graph enables the learning of the fixed dimension embeddings for each node that represents geometry which helps to generalize over any geometry.

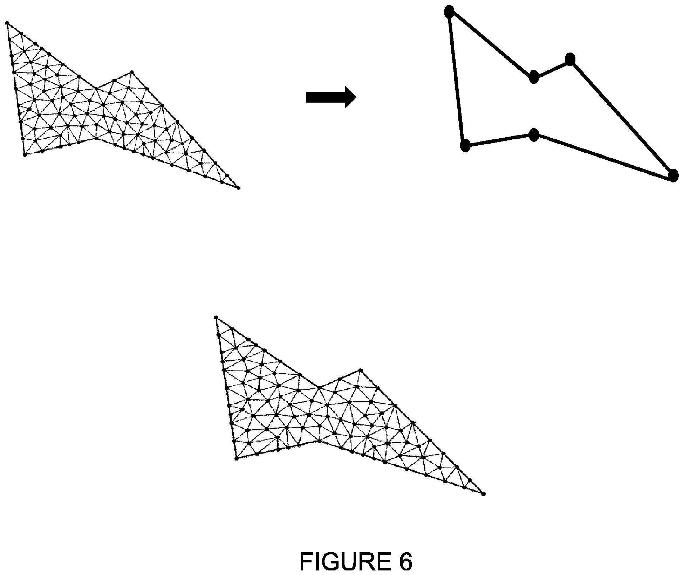

Figure 6 illustrates a vertex graph generated based on a coarse mesh (top) and a main graph generated based on the coarse mesh (bottom) - formed using the nodes and edges of input coarse mesh as described above.

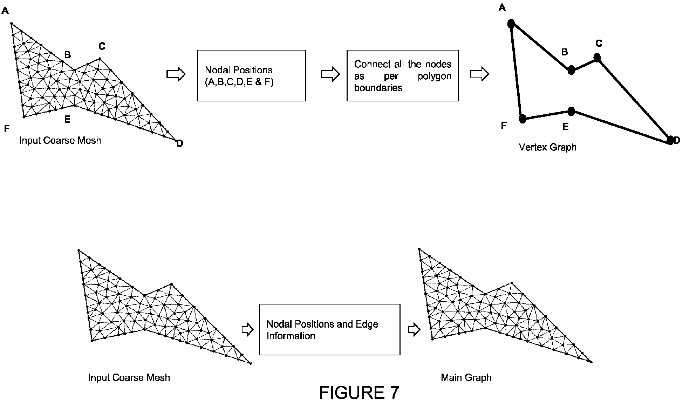

Figure 7 is a diagram illustrating the generation of a vertex graph and a main graph in more detail. It can be seen from the illustration of the vertex graph generation at the top of Figure 7 that the nodal positions A-F (of the vertices of the geometry) are extracted and connected as per the geometry boundaries to generate the vertex graph. As indicated elsewhere herein, a vertex graph may be generated for each coarse mesh node, and in that case the nodes of each vertex graph include information about the vertex nodes and the coarse mesh node concerned. The illustration in Figure 7 is a simplification. It can be seen from the illustration of the main graph generation at the bottom of Figure 7 that the coarse mesh nodes and coarse mesh edges of the coarse mesh (which define the elements of the coarse mesh) are used as the nodes and edges in the main graph, and in this sense the main graph may be considered the same as the coarse mesh. As indicated elsewhere herein, another main graph generation method comprises determining center points of the coarse mesh elements and using these as the main graph nodes, and using Delauny triangulation to compute main graph edges.

There is disclosed herein a methodology herein referred to as GraphMesh. GraphMesh, is a geometrically generalized mesh refinement model to handle (polygonal) geometries with any given numbers of vertices. Enclosed within a generalized Embedding-Decoder based two-stage framework GraphMesh is designed to refine meshes in two sequential steps, leading to the generation of high-quality optimal meshes. In the first step, a GCN-based network is employed to embed node-wise input features to a latent embedding. Subsequently, a second GCN employs a residual connections-based architecture on the obtained node-wise latent embeddings to predict simulation errors for the solution of Poisson's equation. This two-stage process enhances the adaptability of our framework, ensuring effective performance across any shaped geometries.

The Figure 5 framework, and other methods disclosed herein, may be considered as corresponding to implementations of the GraphMesh framework.

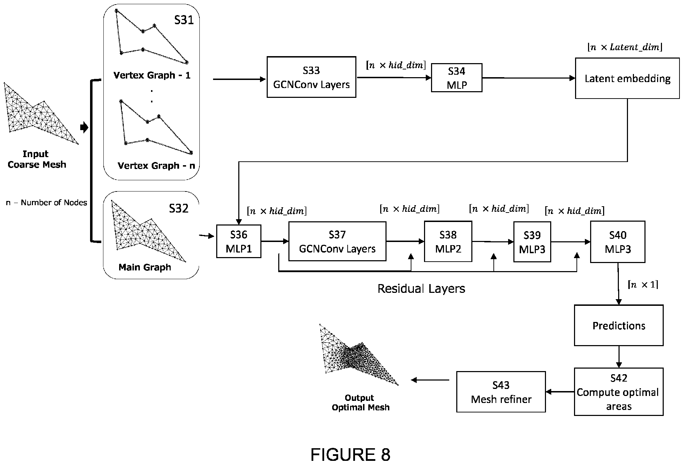

Figure 8 is a diagram illustrating a method which may be considered an implementation of the Figure 5 framework and/or GraphMesh. The Figure 8 method comprises steps S31-S43. A coarse mesh is provided as input. The coarse mesh comprises coarse mesh nodes and coarse mesh edges defining elements of the coarse mesh (the coarse mesh nodes define/correspond to vertices of the elements of the coarse mesh and the coarse mesh edges define/correspond to edges of the elements of the coarse mesh), as illustrated in Figure 8. The coarse mesh comprises n nodes.

Step S31 comprises generating n vertex graphs - a vertex graph for each node in the coarse mesh. These may be referred to as per-node vertex graphs. Each vertex graph comprises nodes corresponding to the vertices of the area/volume defined by the geometry of the coarse mesh and information about the coarse mesh node to which the vertex graph relates. The vertex graphs may be considered sub-graphs of a single, overall vertex graph.

Step S32 comprises generating a main graph. As illustrated, the coarse mesh is used as the main graph here. Steps S33 and S34 comprise using GCN (graph convolutional network) convolutional layers followed by a multi-layer perceptron (MLP) to generate a latent embedding of the overall vertex graph. Steps S33 and S34 may be considered to comprises using a first GCN to extract the latent embedding. The latent embedding has a size of $n \times latent\_dim$, where $latent\_dim$ is the number of latent dimensions (a hyper-parameter). Incidentally, where the embedding is referred to being "fixed-size", this is taken to mean that the number of columns in the latent embedding may be fixed (as neural networks are independent of the number of rows of the input vector).

Steps S36-S40 comprise using a second GCN to generate predictions based on the latent embedding of the vertex graph and the main graph. Specifically, Step S36 comprises using an MLP on the main graph and the latent embedding, step S37 comprises using GCN convolutional layers, and steps S38-S40 comprises using MLPs. Steps S37-S40 comprise using a residual layers approach. The size of the outputs of the steps are shown in Figure 8 (as $n \times hidden\_dim$, where $hidden\_dim$ is the number of hidden dimensions in the second GCN). The residual layers indicate certain skip connections where the output of the previous step is added to the output of the current step. For example in Figure 8 the output of step S36 is added to the outputs of steps S37, S38 and S39. This attempts to preserve the input information given in the initial steps by adding the same to the outputs of later steps.

The predictions generated using the second GCN comprise predicted errors between a simulation using the coarse mesh and a simulation using a fine mesh for the same geometry, and will be described in more detail later below.

Step S42 comprises computing the optimal areas (or characteristic areas/regions) - i.e. the regions requiring refinement - based on the predictions. Step S43 comprises refining the coarse mesh based on the determined characteristic regions to generate the optimal mesh as output. Steps S42 and S43 may comprises known mesh refinement techniques such as those described later below.

The data size of each per-node vertex graph in the Figure 8 method is:

Data ($X = [b \times 5]$, edge_id = $[2 \times b]$), where "x" corresponds to the nodes of the vertex graph and edge_id corresponds to the edges of the vertex graph.

- The size [b x 5] corresponds to [No. vertex graph nodes x Feature size].
- The size [2 x b] corresponds to [2 x No. of Edges in vertex graph].

In the above, the feature size for the nodes of the vertex graph is "5" - this comprises 1. boundary condition; 2. mean value coordinates; 3. depth; 4. vertex distance; and 5. PDE feature. These terms are described later herein. The size may of course be different if different/additional/fewer features are included in the nodal information. For the data size regarding the edge information, 2 is a fixed number which shows how the edge information is input to the model. For example, if nodes 1,2 and 3,4 and 5,6 are connected (3 edges). Then we represent this information as [2,3] vector i.e. [[1,3,5],[2,4,6]] the first row includes the nodes 1,3,5 and second row includes 2,4,6.

The data size of the main graph in the Figure 8 method is:

Data ($X = [a \times latent\_dim]$, edge_id = $[2 \times c]$, y = $[a]$), where "X" corresponds to the nodes of the main graph and edge_id corresponds to the edges of the main graph, and "y" corresponds to the ground truth error.

- The size [a x latent_ dim] corresponds to [No. main graph nodes x Feature size].
- The size [2 x c] corresponds to [2 x No. of Edges in main graph].

The ground truth error comprises an error determined based on carrying out simulations using the coarse mesh and a fine mesh, and is included in the data for the main graph only when the model is being trained.

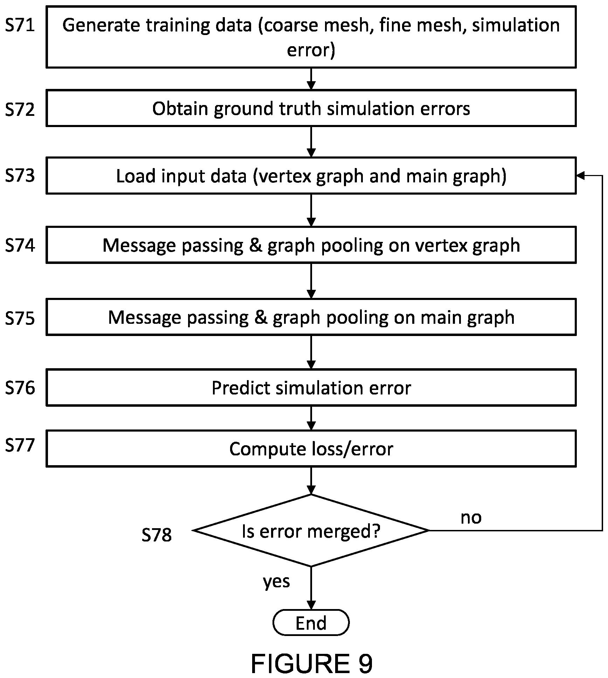

Figure 9 is flowchart illustrating a method for training a mesh refinement model, which may be considered an implementation of the Figure 5 framework and/or GraphMesh. The Figure 9 method comprises steps S71-S78.

Step S71 comprises generating training data: a coarse mesh and a corresponding fine mesh with the same geometry/boundaries.

Step S72 comprises obtaining the ground truth simulation errors. Simulation errors comprise the difference between simulations carried out using the coarse mesh and simulations carried out using the fine mesh and are used as ground truth errors in the training, in line with the AI approach in Figure 2. The ground truth simulation errors here are computed per element of the coarse mesh, but could be computed per coarse mesh node of the coarse mesh.

Step S73 comprises loading/generating the input data: a vertex graph and a main graph. Step S74 comprises message passing and graph pooling on the vertex graph (i.e. using a first GNN to generate an embedding of the vertex graph). Step S75 comprises message passing and graph pooling on the main graph (i.e. using a second GNN to process/convolve the main graph and the embedding of the vertex graph).

Step S76 comprises predicting, based on the output of the step S75, a simulation error. The simulation error here is per coarse mesh node of the coarse mesh. The simulation error could be "element-wise" - i.e. per element of the coarse mesh.

Step S77 comprises computing the loss/error between the predicted simulation errors and the ground truth simulation errors.

Step S78 comprises determining if the loss/error is merged. If "no", weights of the first and second GNNs are adjusted and the method is re-iterated to newly predict simulation errors - this is represented by the method proceeding to step S73. If "yes" then the method ends and the model comprising the first and second GNNs is considered trained.

Operations in line with the Figure 5 framework and/or steps S31 and S32 may be carried out in step S73. Step S73 may be considered to correspond to steps S31 and S32 and steps S74-S76 may be considered to correspond to steps S33-S40, and description of the steps may apply to the corresponding other steps.

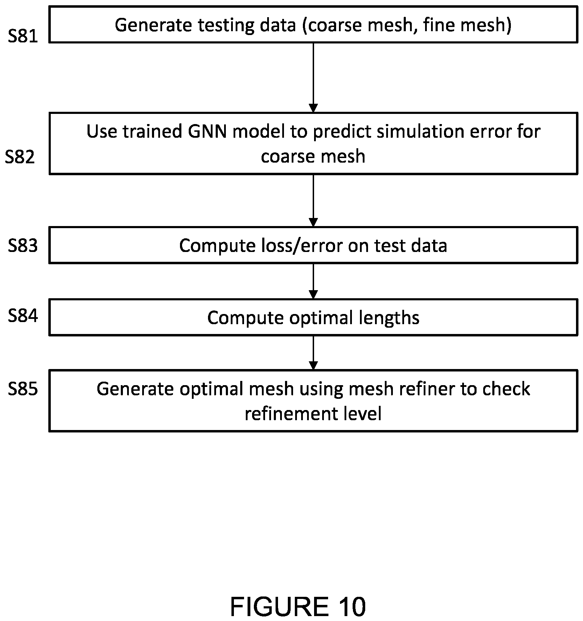

Figure 10 is flowchart illustrating a method for testing a trained mesh refinement model, e.g. that trained in the Figure 9 method, which may be considered an implementation of the Figure 5 framework and/or Graph-Mesh. The Figure 10 method comprises steps S81-S86.

Step S81 comprises generating testing data: a coarse mesh and a corresponding fine mesh with the same geometry/boundaries. Step S82 comprises using the trained GNN model (trained first and second GNNs, e.g. from the Figure 9 method) to predict simulation errors for the coarse mesh. Step S83 comprises computing the loss/error on the test data - i.e. the difference between the predicted simulation errors and the test data ground truth simulation errors (computed in the same way as the ground truth simulation errors for the training data). The loss/error may be examined and a determination made as to whether the trained model is performing satisfactorily.

Steps S84 and S85 comprise computing optimal (or characteristic) areas/regions and generating an optimal mesh using a mesh refiner. The optimal mesh may be evaluated to determine in another way if the trained model is performing satisfactorily.

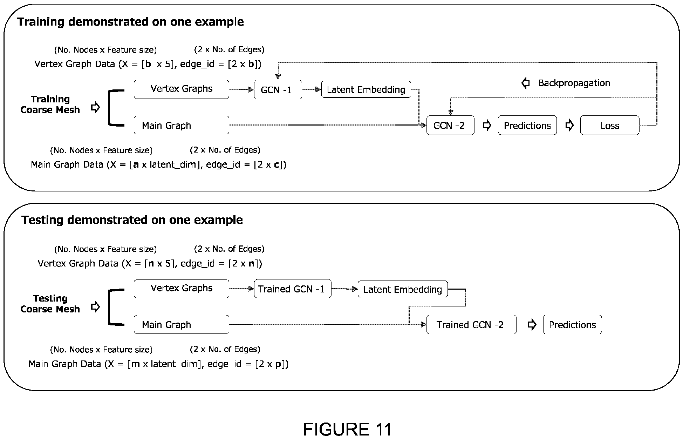

Figure 11 is a diagram illustrating an implementation of the training method of Figure 9 and the testing method of Figure 10.

Considering the training method demonstrated on an example, illustrated at the top of Figure 11: a training coarse mesh is provided and vertex graphs and a main graph are generated based thereon, in accordance with methods described herein.

As illustrated, the size of each vertex graph is:

- Vertex Graph Data (X = [b x 5], edge_id = [2 x b]), where "X" corresponds to the nodes of the vertex graph and edge_id corresponds to the edges of the vertex graph,

and the size of the main graph is:

- Main Graph Data (X = [a x latent_dim], edge_id = [2 x c]), where "X" corresponds to the nodes of the main graph and edge_id corresponds to the edges of the main graph,

and where:

- a - Number of Nodes in the Coarse Mesh
- b - Number of Polygon Edges (this example uses a 2D polygon as the geometry for the coarse mesh and therefore the number of vertices is the same as the number of edges in the geometry)
- latent_dim - Dimension size of output vector from the vertex graph
- c - Number of Edges in the Coarse Mesh
- X - Node feature vector of input Graph (vertex/main)

As illustrated, and as described in the Figure 9 training method, a first GCN GCN-1 is used to extract an embedding of the vertex graph, and a second GCN GCN-2 is used to, based on the main graph and the embedding of the vertex graph, generate predictions comprising predicted simulation errors. Based on the predications, a loss is computed and weights of the first and second GCNs adjusted based on the loss through back propagation. Some steps are not illustrated here, such as checking if the loss has converged, for example.

Considering the testing method demonstrated on an example, illustrated at the bottom of Figure 11: a testing coarse mesh is provided and vertex graphs and a main graph are generated based thereon, in accordance with methods described herein.

As illustrated, the size of each vertex graph is:

- Vertex Graph Data (X = [n x 5], edge_id = [2 x n]), where "X" corresponds to the nodes of the vertex graph and edge_id corresponds to the edges of the vertex graph,

and the size of the main graph is:

- Main Graph Data (X = [m x latent_dim], edge_id = [2 x p]), where "X" corresponds to the nodes of the main graph and edge_id corresponds to the edges of the main graph,

and where:

- m - Number of Nodes in the Coarse Mesh
- n - Number of Polygon Edges (this example uses a 2D polygon as the geometry for the coarse mesh and therefore the number of vertices is the same as the number of edges in the geometry)
- latent_dim - Dimension size of output vector from the vertex graph
- p - Number of Edges in the Coarse Mesh
- X - Node feature vector of input Graph

As illustrated, and as described in the Figure 9 training method, the trained GCN GCN-1 is used to extract an embedding of the vertex graph, and the trained GCN GCN-2 is used to, based on the main graph and the embedding of the vertex graph, generate predictions comprising predicted simulation errors. Some steps are not illustrated here, such as evaluating the results of the testing, for example.

It will be appreciated that a plurality of different meshes and different geometries (for example with different numbers of vertices) may be used in training first and second GNNs/GCNs in any methods disclosed herein. For example, different iterations of training steps may utilize different geometries for the meshes.

The aspects of coarse mesh generation, simulation error computation, and mesh refinement based on predicted simulation errors are described in more detail below.

Mesh representations of shapes involve discretization of the domain leading to the generation of both CoM (coarse mesh) and FiM (fine mesh) of the given geometry. Meshes may be generated (for training the GraphMesh model) by initially creating diverse input geometries (e.g. through the methodology employed in GMR-Net which is discussed and referenced above) and subsequently utilizing Gmsh software (Geuzaine C., Remade F.: Gmsh: a three-dimensional finite element mesh generator with built-in pre- and post-processing facilities, International Journal for Numerical Methods in Engineering 79, 1309-1331 (2009), and https://gmsh.info/doc/tex info/gmsh.html#Specifying-mesh-element-sizes) on the generated geometries. The geometry generation process first entails the use of two concentric circles with proper spacing. Then the internal area formed by these circles is subsequently divided into N sections, where N represents the number of vertices required for the specific geometry under generation. Subsequently, within each section, an interior point is randomly generated which forms the polygon vertex, and lastly joining of the points in each section leads to the formation of a unique geometric shape.

The generated meshes are used for simulations to compute the ground truth simulation errors for training. The simulations may be executed with the aid of an opensource FE solver FreeFEM (Hecht F.: New development in FreeFem++. Journal of Numerical Mathematics 20, 251-266 (2012)). The problem addressed commonly in simulations using meshes involves the solution of Poisson's equation $\nabla u + \varphi = 0$ within generated meshes with the boundary condition of $u = \alpha$ imposed on the boundaries. Here, $\varphi$ and $\alpha$ represent the PDE parameter and boundary value of the input meshes, respectively. The methodology used in GMR-Net may be followed - this involves estimating the simulation error values e at each nodal location of input CoM. This error estimation process utilizes the simulation results uCoM and uFiM corresponding to both CoM and FiM, respectively.

Mesh refinement may be facilitated using refinement module of Gmsh. This refiner operates on the basis of an element's characteristic length $l$, which can be dynamically adjusted to enhance accuracy. Specifically, the refinement process focuses on regions where the e around a given node (of the coarse mesh) is notably large. As the characteristic length decreases, meshes are locally refined in the vicinity of the nodal region, optimizing the resolution in areas with significant error deviations. The characteristic length around a node is precisely defined by a user-defined parameter $\beta$ as: $l = \beta / e$.

Here, $\beta$ plays a role in governing the refinement density of the meshes, offering users the flexibility to tailor the refinement process based on specific considerations and desired levels of accuracy.

It will be appreciated that other methods for generating the geometries and meshes for training, for computing the simulation errors, and for refining the coarse mesh based on the predicted errors, may be used. It will be appreciated that other simulations could be utilized other than those involving the solution of Poisson's equation $\nabla u + \varphi = 0$ within generated meshes with the boundary condition of $u = \alpha$ imposed on the boundaries.

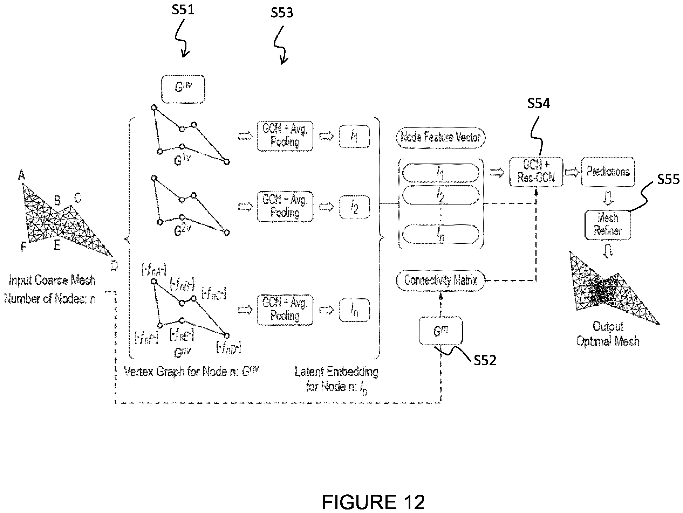

Figure 12 is a diagram illustrating a specific implementation method of the GraphMesh framework for refining a mesh and may be considered to correspond with the Figure 5 framework and the Figure 8 method. The Figure 12 method comprises steps S51-S55. Step S51 comprises generating a vertex graph Gnv, step S52 comprises generating a main graph Gm, step S53 comprises using a first GCN to extract an embedding of the vertex graph, step S54 comprises using a second GCN to generate, based on the embedding of the vertex graph and on the main graph, predictions, and step S55 comprises refining the coarse mesh based on the predictions.

The core of the Figure 12 implementation involves training a GNN model to learn a mapping between parameters, including geometry G, boundary conditions (BC), and the corresponding region-specific simulation error e. To enhance geometric generalization, the inherent properties of GNNs are leveraged, which are independent of the number of nodes within a given graph. Specifically, a two-step approach is employed, comprising the Vertex-Graph Gnv ($G^{nv}$ in Figure 12) for each node in the input CoM and the Main-Graph Gm ($G^m$ in Figure 12) representing the input CoM itself. Each graph Gnv captures embeddings for a CoM node n using geometric features with respect to polygon vertices and boundaries and PDE features, regardless of the number of edges or vertices in the geometry. The nodal features between the vertex x and node n of Gnv are represented by fnv. The graph Gm is used to predict simulation error e at each nodal region of the input CoM (i.e. at each node of the CoM). The predicted simulation errors (denoted as ê) are then subjected to the equation $l = \beta / e$, yielding an optimal length $l$. These optimal lengths are subsequently employed to guide the mesh refinement process.

By predicting e the implementation provides control of mesh refinement through adjustments in mesh refinement parameters in the equation $l = \beta / e$. This presents a versatile and adaptable strategy for refining meshes at the user's discretion (by the choice of β), without necessitating re-training for each choice of $l$. Moreover, this approach also facilitates a rigorous evaluation methodology that enables the observation of the relationship between simulation accuracy and simulation time across varying refinement levels during inference. This not only provides insights into the trade-offs between accuracy and computational efficiency but also contributes to a better understanding of the model's performance under different refinement configurations.

Figure 12 illustrates per-node vertex graphs which are generated (step S51) for each coarse mesh node. That is, the graph G1v corresponds to the coarse mesh node n=1. Each per-node vertex graph comprises a node for each vertex in the geometry A-F. Each node in a per-node vertex graph comprises information related to the vertex A-F concerned and the node n concerned. In the bottom vertex graph, the nodal features between the vertex x and node n of Gnv are represented by fnv. That is, for the vertex graph node corresponding to the vertex A the nodal features (related to the vertex A and the node n are represented by fnA ($f_{nA}$ in Figure 12, specifically). The per-node vertex graphs may be considered sub-graphs of an overall vertex graph.

As illustrated in Figure 12, GCN layers and average pooling are used (step S53) on each per-node vertex graph to generate a per-node embedding. The per-node embeddings are denoted $l_n$. An overall vertex graph embedding may be considered as comprising the per-node embeddings, and may be referred to as a node feature vector. The use of GCN layers and average pooling in step S53 may be considered using a first GCN to extract the embedding of the vertex graph. Step S54 comprises applying a residual layers-based GCN approach to the node feature vector and main graph (after processing by a connectivity matrix) to generate the predictions and may be considered using a second GCN to generate the predictions.

Simulations are conducted on both the coarse and fine meshes, generating region-wise error distributions based on the L1-norm of simulation results. Subsequently, acknowledging the time-consuming and resource-intensive nature of fine mesh generation, the automation strategy is to use GNN-based supervised learning to predict the region-wise simulation errors.

Generating the nodal features for each node in each vertex graph comprises generating geometric features. In the Figure 12 implementation, the geometric features, for defining node attributes, comprise mean value coordinate (MVC), vertex distance, and depth. These features contribute to a representation of nodal attributes, for extraction of the mesh characteristics during the error estimation process.

MVC: The MVC feature computes the weight of a polygon vertex p for the node n in the given input CoM. Considering an input CoM with k vertices the weight $\eta_v$ for vertex v is computed as (based on Floater M.S.: Mean value coordinates, Computer Aided Geometric Design 20, 19-27 (2003)):

$$\eta_v = q_v / \sum q_j$$

$$q_v = (tan\ (\theta_{v\text{-}1}\ /\ 2)\ +\ tan\ (\theta_v\ /\ 2))\ /\ ||p_v - v||$$

wherein the sum $\Sigma q_j$ is over j=1 to k, and where with $\theta_v$ = angle $<p_v\ v\ p_{v+1}$.

This feature, employed in learning the CoM node's position relative to polygon vertices, demonstrates robustness against variations in polygon geometry.

Vertex Distance and Depth. The Vertex Distance feature provides insights into the number of hops separating each polygon vertex p from the node n in the given input CoM, offering information on spatial information. The Depth feature gives the closest polygon vertex p to the node n within the CoM.

PDE and Boundary Condition. The PDE features relates to the PDE parameter φ of the Poisson's equation and the boundary values α on all the boundary edges. For the boundary condition corresponding α value is used for the polygon vertex p.

Architectural Details in the Figure 12 methodology

The formation of the vertex graph Gnv aims to obtain a node-wise representation of the overall polygonal shape. The graph for a node n of input CoM is given by Gnv = (Vnv, Env) where Gnv represents the external geometry of the polygon. Here, vertices of the polygon represents nodes Vnv (A,B,C,D,E and F as illustrated in figure 12), and polygon edges represent the links Env (Figure 12).

The input node features fnv for a given node n depend on polygon vertex v of the given input CoM as described above. Constructing a vertex graph for each node n of input CoM accommodates features for any number of polygon vertices. This results in a fixed dimensional feature vector for the nodes of the vertex graph. In this configuration, the features fnv of a node n concerning the polygon vertex v are specifically assigned to the corresponding node in the vertex graph. Consequently, a given input CoM consists of sub graphs equivalent to the number of nodes in the mesh. Furthermore, each sub graph contains nodes equivalent to the number of polygon vertices with a fixed dimensional node feature vector irrespective of the polygon geometry. This arrangement makes the model adaptable to diverse polygonal shapes, independent of the number of vertices/edges in the CoM geometry without re-training. After the training phase, the latent embedding of the nodes in the input coarse mesh stores information corresponding to the polygon corners.

The vertex graph Gnv is designed to encode the polygon's distinct geometry into a representative embedding. Within this graph, the message-passing step within the first GCN gives an updated node feature in Gnv - vector $x'_i$ using the function given by (Kipf T.N., Welling M.: Semi-supervised classification with graph convolutional networks, In: International conference on learning representations (2017)):

$$x'_i = f^v \bigoplus (x_k W).$$

Where $f^v$ denotes the implementation of MLP and $\bigoplus_{k \in N(i)}$ denote averaging over the one-hop neighbors $N(i)$ of node feature vector $x_i$ with learnable parameter W. This function aggregates the neighborhood's information for each node via its connected edges. Further, to obtain a graph level latent representation for the nodes in main graph Gm, a subsequent average pooling layer is introduced over the nodes of the corresponding vertex graph Gnv. For information aggregation, a single-layered GCN with 128 hidden dimensions was used on the vertex graph, hence integrating one-hop neighborhood-based information.

The latent representations of nodes within the CoM, learned from the vertex graph, act as the node features for the main graph Gm and the edge information is obtained using the linkages between nodes in CoM. Subsequently, the graph Gm is passed through a GCN architecture based on Residual Network. The architecture employs information aggregation over a 6-hop neighborhood, featuring skip-connections every two layers of GCN, and a hidden dimension size of 128. This ResNets-based GCN enables the extraction of node-level e within the CoM. The proposed two-step process enables an initial compression of polygon vertex-based information into a fixed-sized latent embedding followed by leveraging this embedding for predicting e values. This introduces a generalization ability to the approach, making it universally applicable to various polygon geometries without any limitations concerning the number of polygon vertices.

Considering training the first and second GCNs using the Figure 12 methodology, during the training phase, both GCNs are trained using a supervised approach, with ground truth error values associated with each node in Gm. The first and second GCNs (which may be referred to collectively as a model, or as GraphMesh) are trained with the L1 loss function between the ground truth e and model predicted ê across N nodes, according to:

$$L = (1/N) \sum | e_i^{\char`\^} - e_i |,$$

where the sum is over i = 1 to N.

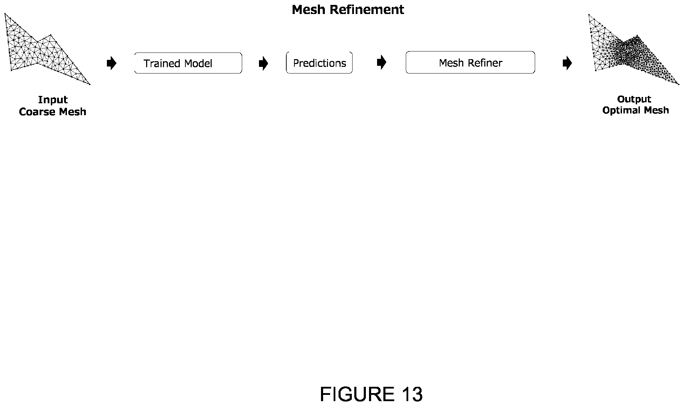

Figure 13 is a diagram illustrating a simplified method for refining an input coarse mesh using any first and second GNNs trained herein, referred to in Figure 13 as a trained model. The method comprises inputting the coarse mesh into the trained model to generate predictions, and using a mesh refiner (e.g. Gmsh) to refine the coarse mesh and thereby generate an optimal mesh.

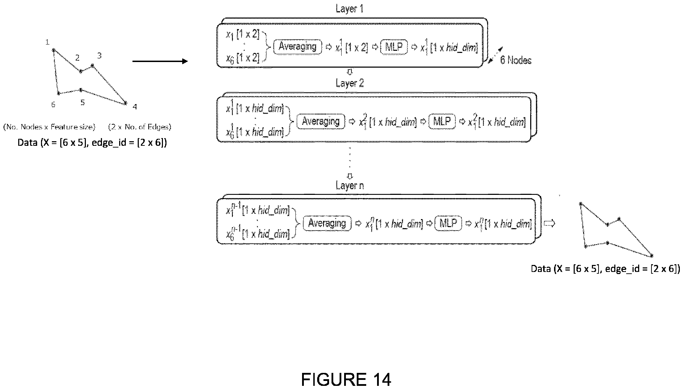

Figure 14 is a diagram illustrating an implementation of the step of using a first GNN to extract an embedding from the vertex graph. An input vertex graph is illustrated on the right-hand-side, having a size:
Data (x = [6 x 5], edge_id = [2 x 6]), where the number of vertices in the geometry of the coarse mesh in this case is 6 and the number of edges is 6.

Operations of layers of the first GNN are illustrated in the center of Figure 14. For example, in layer 1 the nodal features from the vertex graph are averaged to generate a single feature vector and a multi-layer perceptron (MLP) is used to generate an intermediate vector. This vector is used in the layer 2 and the same process is carried out as was performed on the nodal features from the vertex graph in layer 1. The output of layer 2 is fed to the next layer, and in total there are n layers. The output of the nth layer is the embedding for the nodes of the vertex graph. To obtain a single vertex graph-level embedding we perform average pooling (i.e. averaging all node embeddings to obtain a single embedding) to obtain per-node vertex embedding.

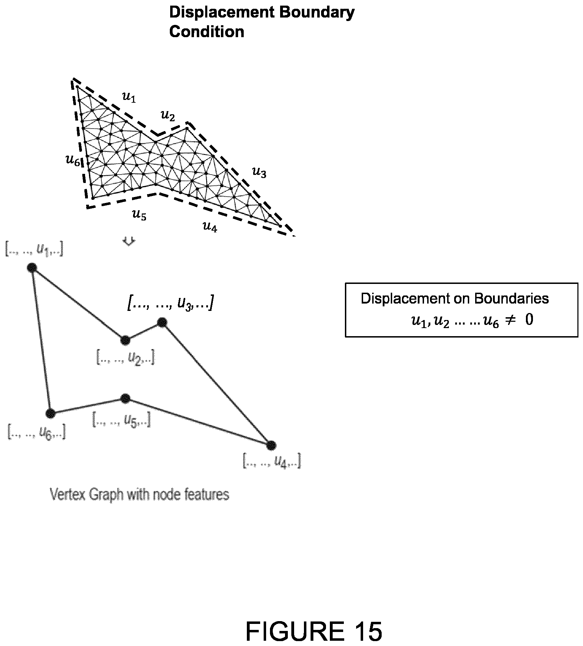

Figures 15 to 17 are diagrams useful for understanding how boundary conditions may be utilized in the GraphMesh framework. Figure 15 illustrates how a displacement boundary condition may be utilized in the GraphMesh framework. Specifically, the boundary condition for an edge is denoted $u_v$ (and $u_v$ is not equal to zero for any vertex), and this boundary condition information $u_v$ is included in the nodal features of a node corresponding to a vertex adjacent to the edge. For 2D geometries, boundary conditions for edges may be assigned to nodes based on following a clockwise order - i.e. assigning the node the boundary condition of the edge to its right (this is of course arbitrary and other formulations could be used). In 3D geometries, for example, the boundary condition feature on each node may comprise an average of the boundary conditions of edges connected to that node.

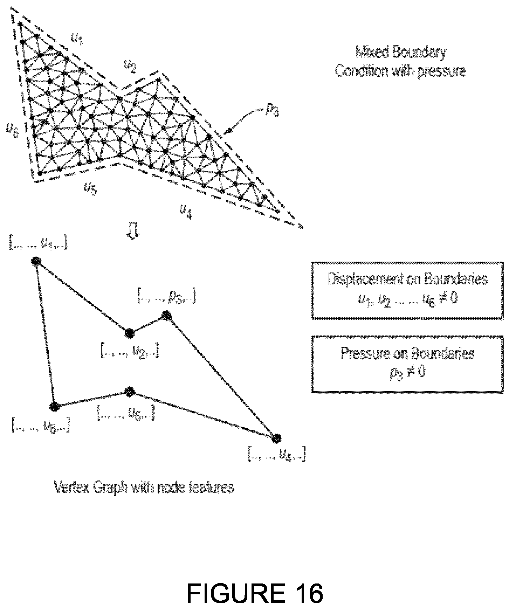

Figure 16 illustrates how a displacement boundary condition and a pressure boundary condition may be utilized in the GraphMesh framework. Specifically, the displacement boundary condition for an edge is denoted $u_v$ and the pressure boundary condition for an edge is denoted $p_v$ (and $u_v$ is not equal to zero for v = 1, 2, 4, 5, 6 and $p_v$ is not equal to zero for v = 3), and this boundary condition information $u_v$ and $p_v$ is included in the nodal features of a node corresponding to a vertex adjacent to the edge.

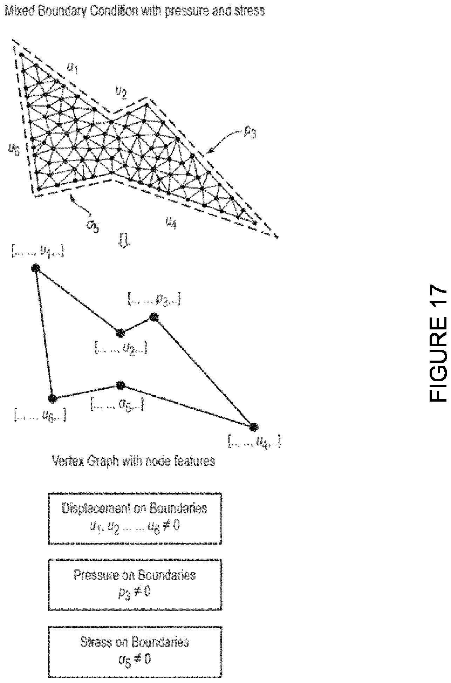

Figure 17 illustrates how a displacement boundary condition, a pressure boundary condition, and a stress boundary condition may be utilized in the GraphMesh framework. Specifically, the displacement boundary condition for an edge is denoted $u_v$, the pressure boundary condition for an edge is denoted $p_v$, and the stress boundary condition for an edge is denoted $\sigma_v$ (and $u_v$ is not equal to zero for v = 1, 2, 4, 6, $p_v$ is not equal to zero for v = 3 and $\sigma_v$ is not equal to zero for v = 5), and this boundary condition information $u_v$, $p_v$ and $\sigma_v$ is included in the nodal features of a node corresponding to a vertex adjacent to the edge. A single edge may of course have more than one boundary condition, but for simplicity only one boundary condition per edge is illustrated in Figures 16-17,

The boundary conditions correspond to the simulation for which the mesh is being generated. For example, when generating a mesh for a component in a vehicle, boundary condition information of stress caused by the movement and/or weight of the vehicle may be included in the mesh and thus may be included in the vertex graph. The inclusion of boundary condition information is not essential.

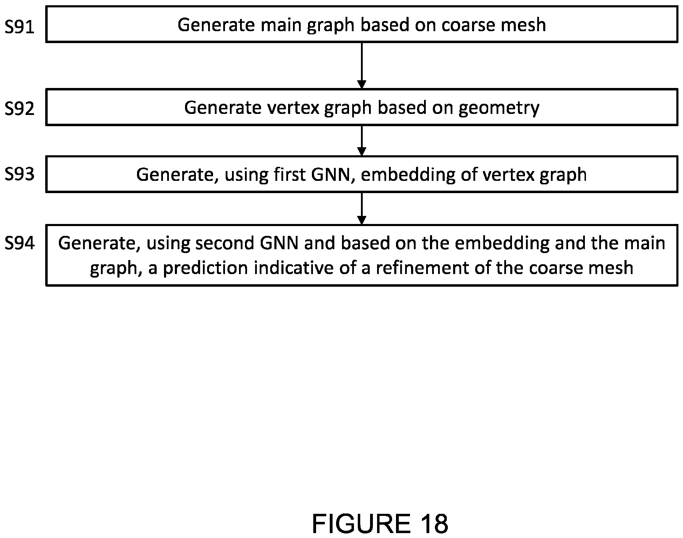

Figure 18 is a diagram illustrating a method. The method comprises steps S91-S94. Step S91 comprises generating a main graph based on a coarse mesh. That is, step S91 comprises generating a main graph based on a coarse mesh, the coarse mesh comprising a plurality of (first) mesh elements arranged to fill an area or volume defined by a geometry/boundary (the main graph comprising main graph nodes and main graph edges defining the (first) mesh elements).

Step S92 comprises generating a vertex graph based on the geometry. That is, step S92 comprises generating a vertex graph based on the geometry/boundary, wherein the vertex graph comprises vertex graph nodes corresponding to vertices of the area or volume defined by the geometry/boundary and vertex graph edges corresponding to links between the vertices in the geometry/boundary.

Step S93 comprises generating, using a first GNN, an embedding of the vertex graph. Step S94 comprises generating, using a second GNN and based on the embedding and the main graph, a prediction indicative of a refinement of the coarse mesh. That is, step S94 comprises generating, using a second GNN and based on the main graph and the embedding of the vertex graph, a prediction indicative of a refinement of the coarse mesh (required) for generating a refined/optimal mesh (the refined mesh comprising a plurality of second mesh elements arranged to fill the area or volume defined by the geometry/boundary).

The coarse mesh may be structured so as to comprise coarse mesh nodes and coarse mesh edges defining the elements of the coarse mesh. The coarse mesh nodes may define/correspond to vertices of the elements of the coarse mesh and the coarse mesh edges may define/correspond to edges of the elements of the coarse mesh. The main graph nodes and main graph edges may then correspond to the coarse mesh nodes and coarse mesh edges, respectively. Concerning the architecture of the first and second GNNs, the first and/or second GNN may comprise at least one multi-layer perceptron layer and the second GNN may comprise a residual-layers-based architecture.

Step S92 may comprise generating a per-node vertex graph per coarse mesh node, and each per-node vertex graph comprises a plurality of per-node vertex graph nodes corresponding respectively to the vertices. Each per-node vertex graph node then comprises geometric information relating to the coarse mesh node corresponding to the per-node vertex graph and the vertex corresponding to the per-node vertex graph node. Furthermore, each per-node vertex graph then comprises a plurality of per-node vertex graph edges corresponding respectively to the links between the vertices in the geometry. In line with the above description, for example, the geometric information may comprise any of mean value coordinates (MVC) of the vertex concerned for the coarse mesh node concerned, a number of hops between the vertex concerned and the coarse mesh node concerned (vertex distance), the vertex closest to the coarse mesh node concerned among the vertices (depth), boundary condition information for the vertex concerned, and simulation parameters.

Steps of the Figure 18 method may be considered to correspond to steps of other methods disclosed herein (for example step S91 may be considered to correspond to any of steps S32, S73, S52, or any description of main graph generation herein, step S92 may be considered to correspond to any of steps S31, S71, S51, or any description of vertex graph generation herein, step S93 may be considered to correspond to steps S33-S34 or step S74 or step S53, or any description of use of a first GNN/GCN herein, and step S94 may be considered to correspond to steps S36-S40 or steps S75-S76 or step S54) and features described in corresponding steps may apply here and vice versa. For example, any of the description of the Figure 8 implementation of the GraphMesh framework may be adopted in the corresponding steps in the Figure 18 method.

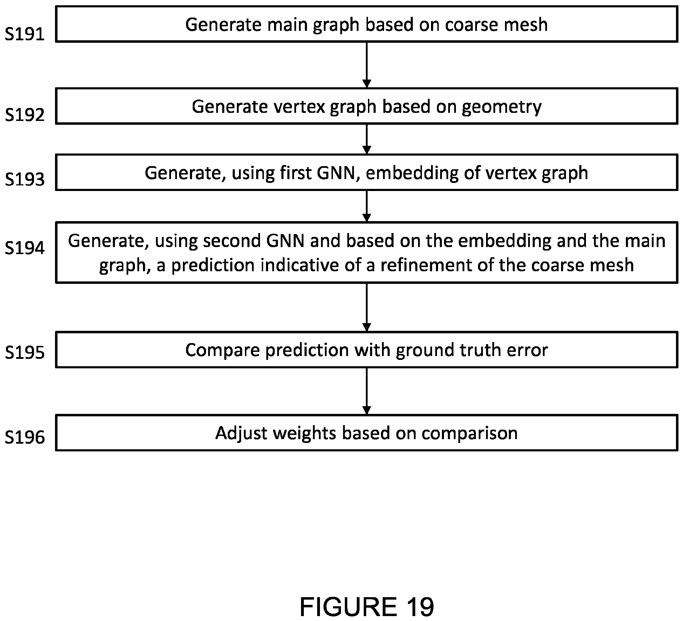

Figure 19 is a diagram illustrating a method for training a model comprising the first and second GNNs (which may be considered an implementation of the GraphMesh framework). The method comprises steps S191-S196. Steps S191-S194 are the same as steps S91-S94 but using training data as the coarse mesh from which the main and vertex graphs are generated, and duplicate description is omitted. The main and vertex graphs generated in this method may be referred to as "training" main and vertex graphs.

Step S195 comprises comparing the prediction with ground truth error. That is, the prediction in step S194 comprises a predicted error (simulation error) and step S195 comprises comparing the predicted error to a ground truth error. Step S196 comprises adjusting weights based on the comparison. That is, step S196 comprises adjusting at least one weight of the first and/or second GNN based on the comparison. The ground truth error comprises an error/difference between a simulation result obtained using the coarse mesh and a simulation result obtained using a fine mesh.

In line with the above description of training, the prediction comprises a per-node predicted error per coarse mesh node of the coarse mesh or main graph node of the main graph), and the ground truth error comprises a per-node ground truth error per coarse mesh node of the coarse mesh or main graph node of the main graph. Step S195 comprises computing an average of per-node losses between corresponding per-node predicted errors and per-node ground truth errors, which may comprise using the L1 loss function.

Although not illustrated in Figure 19, to train the first and second GNNs steps S193-S196 are iterated. The steps may be iterated until the comparison indicates a loss threshold is met or until the comparison indicates loss convergence or until a threshold number of iterations have been performed. Further to the considerations of steps S91-S94 which apply to steps S191-S194, the steps S195 and S196 may be considered to correspond to steps S76 and S77-S78, or any loss computation and weight adjustment described herein and features described in corresponding steps may apply here and vice versa. For example, the description of training in the Figure 12 implementation is applicable here.

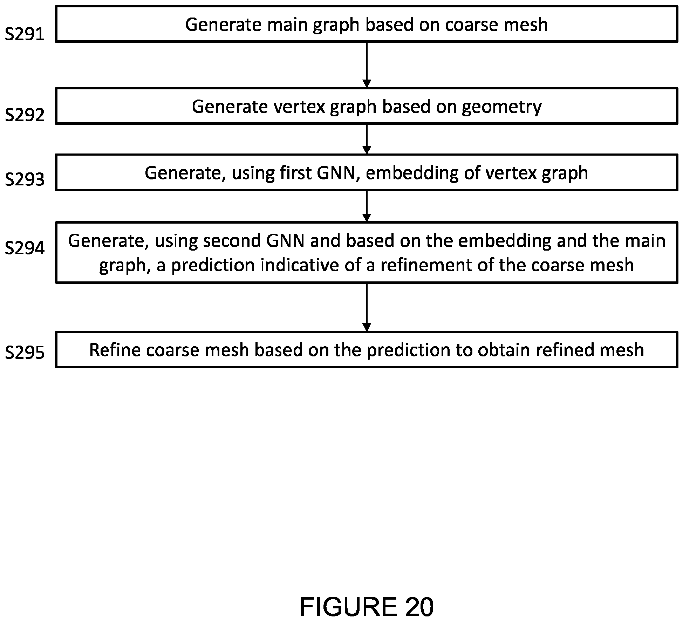

Figure 20 is a diagram illustrating a method of using a trained model comprising trained first and second GNNs (which may be considered an implementation of the GraphMesh framework). The method comprises steps S291-S296. Steps S291-S294 are the same as steps S91-S94, and duplicate description is omitted. Step S295 comprises refining the coarse mesh based on the prediction to obtain a refined mesh. Further to the considerations of steps S91-S94 which apply to steps S291-S294, step S295 may be considered to correspond to steps S42-S43 or step S55, or any mesh refinement based on predicted error described herein and features described in corresponding steps may apply here and vice versa. For example, the description mesh refinement based on error prediction in the Figure 12 implementation is applicable here. The Figure 20 method may use trained first and second GNNs which have been trained using the Figure 19 method.

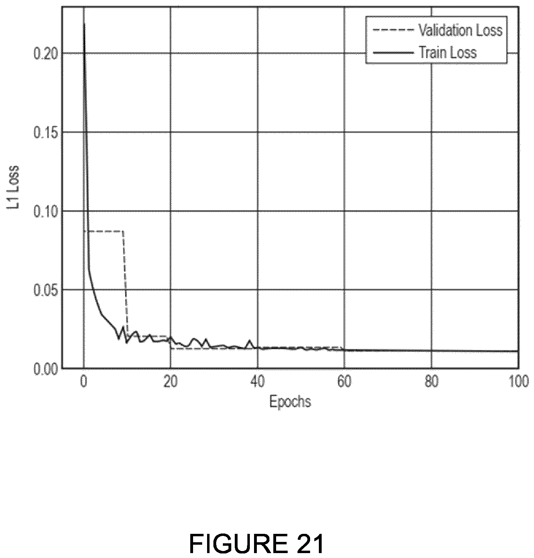

The GraphMesh framework implemented according to the Figure 12 description was trained and tested as described below and results are presented in Figures 21-28.

Dataset

The CoMs for training contained elements within the range of 250-550, with corresponding fine meshes FiMs containing 15-20 times the number of elements present in their coarse mesh counterparts. The positional coordinates of each node in both the CoM and FiM were constrained within the 0 to 1 range. A train-validation dataset was generated according to the above mesh generation description (the methodology employed in GMR-Net and subsequently utilizing Gmsh software, as described before the Figure 12 description) featuring 8000 training CoMs and FiMs, alongside 1500 validation CoMs and FiMs.

Experiment Details

To assess the performance of the method, experiments were performed using one Nvidia A30 24GB GPU. The neural network and training scripts were implemented using PyTorch (Paszke A., et al.: PyTorch: an imperative style, high performance deep learning library, In: Advances in neural information processing systems (2019)) and PyTorch Geometric (Fey M., Lenssen J.E.: Fast graph representation learning with PyTorch, In: ICLR workshop on representation learning on graphs and manifolds (2019)). The batch size was set to 32 and Adam optimizer (Kingma D.P., Ba J.: Adam: a method for stochastic optimization, In: International conference on learning representations (2015)) with a learning rate of 0.0005 was used for optimization. The training process spanned 100 epochs, and the corresponding training and validation loss curves are illustrated in Figure 21.

Governing Equation and Boundary Condition: The displacement field u represented the FE solution. The PDE parameter $\varphi$ was randomly assigned values within the range of 0 to 1. Additionally, each boundary ($\alpha$) in the mesh was subject to a random displacement ranging from 1 to 100. Further, the boundary values were normalized between 0 and 1 during training.

Evaluation Details

To evaluate the model's performance, the average simulation error estimates $A_e$ are calculated across nodes in the refined mesh. This involves first obtaining node-wise $l$ values using the model-predicted $\hat{e}$ using $l = \beta / e$. The Gmsh mesh refiner was then employed to generate refined meshes based on these $l$ values. Subsequently simulations were conducted on these refined meshes, to compute $A_e$ by comparing the simulation results of the model-predicted refined mesh with the corresponding FiM followed by node-wise averaging.

Furthermore, methods for achieving optimal simulation accuracy within minimal time were evaluated. In this evaluation, multiple refined meshes were generated with varying refinement levels by adjusting β values based on a single model predicted eê. For each refined mesh, Ae values were computed while recording the simulation time. The results are visually represented as described below, illustrating the variation in Ae and simulation time under this evaluation.

Evaluation was conducted across two distinct data settings. (1) In-distribution data setting, where both the training and validation sets comprise meshes with polygons having 6, 7, 8, and 9 vertices (E). (2) Out-of-distribution data setting, where the training set includes meshes of polygons with E equal to 6, 7, 8, and 9, and the validation set introduces meshes of polygons with E equal to 10 and 12. Refined meshes were generated with model-predicted ê using Gmsh's $l$, with β set to 0.0084 $*$ max(ê), where max(ê) is the maximum of predicted simulation error values among the nodes of the corresponding mesh. Notably, while GraphMesh inherently handles out-of-distribution data settings, GMRNet required feature down-sampling for inferencing (in the case of GMR-Net, features corresponding to vertices exceeding the 9-vertex limit are averaged out and equally distributed among the nine vertex features to facilitate fair comparisons without re-training). Performance comparisons were conducted between GraphMesh and GMR-Net, both quantitatively and qualitatively. Qualitative assessments involve comparing mesh refinements, while quantitative evaluations employ simulations on output refined meshes from GraphMesh to obtain $A_e$ across nodes of the refined mesh.

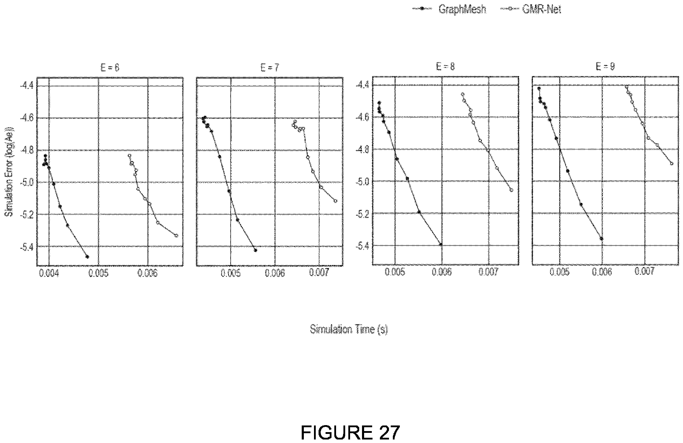

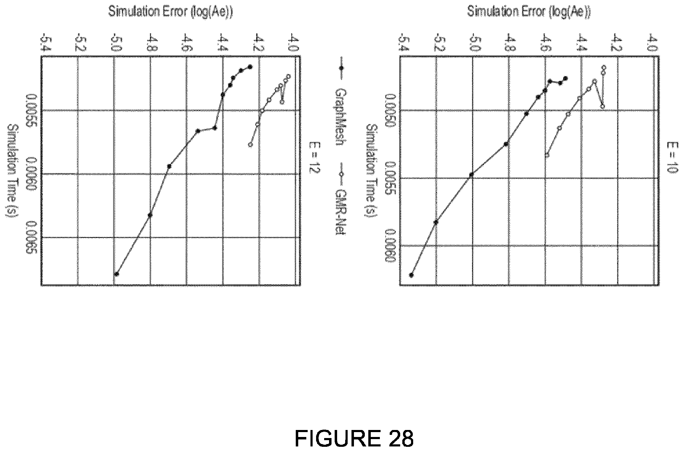

Leveraging GraphMesh's independence from the refinement parameter β, evaluations were conducted on a case with varying refinement levels. 10 values of β between 0.0084$*$max(e) and 0.01$*$max(e) were set. The corresponding simulation error versus simulation time plots are provided across varying refinement level-based meshes as described below (Figures 27 & 28).

Results - Mesh Comparison

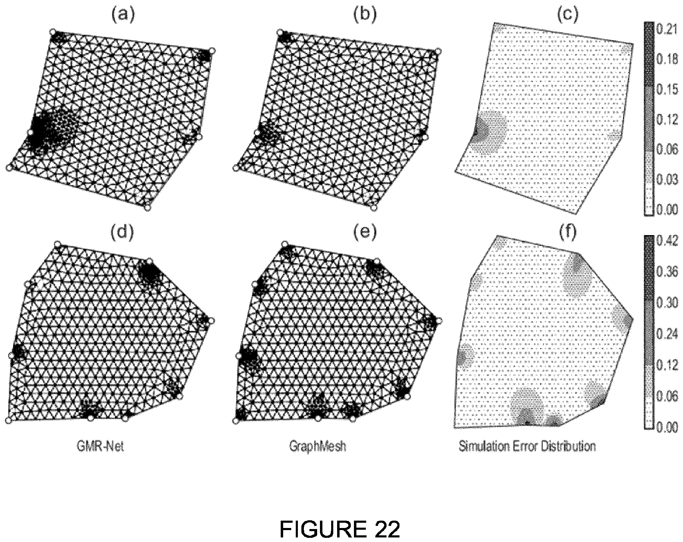

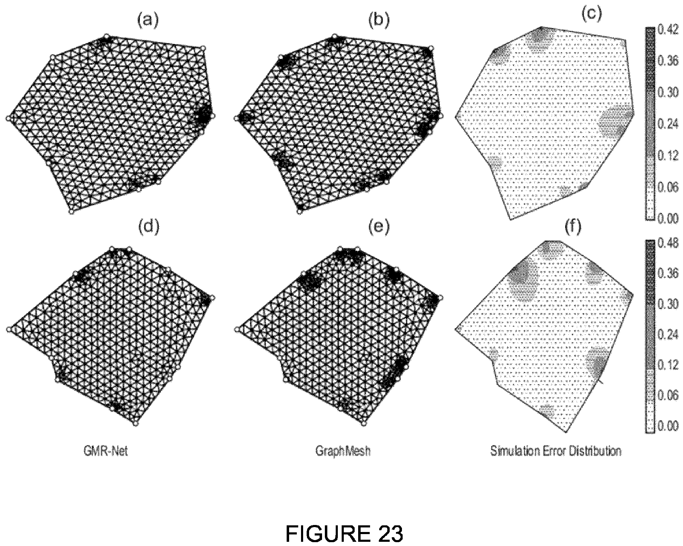

In the evaluation of refinement results, a comparison was conducted using the data from both the in-distribution (Figure 22) and out-of-distribution (Figure 23) datasets, considering polygons with all polygon edges subjected to displacements as boundary conditions during training. The figures present refined meshes from GraphMesh and GMR-Net, along with an error distribution plot depicting the distribution of e on the evaluated geometries. The error distribution plot was obtained based on the comparison of simulation results between the CoM and FiM. Ideally, a mesh refinement model should refine regions of a coarse mesh with simulation errors. Figures 22 & 23 highlight GraphMesh's accurate capture of refinement regions, resulting in the generation of improved non-uniform meshes.

In Figure 22: E = 6 in (a),(b) and (c); E = 9 in (d),(e) and (f); and the results were obtained using the methods GMR-Net ((a) and (d)) and GraphMesh ((b) and (e)) with error distribution of the corresponding CoM ((c) and (f)).

In Figure 23: E = 10 in (a),(b) and (c); E = 12 in (d),(e) and (f); and the results were obtained using the methods GMR-Net ((a) and (d)) and GraphMesh ((b) and (e)) with error distribution of the corresponding CoM ((c) and (f)).

Results - Simulation Error Comparison

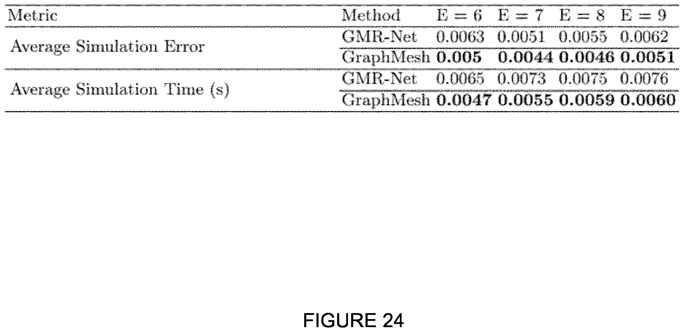

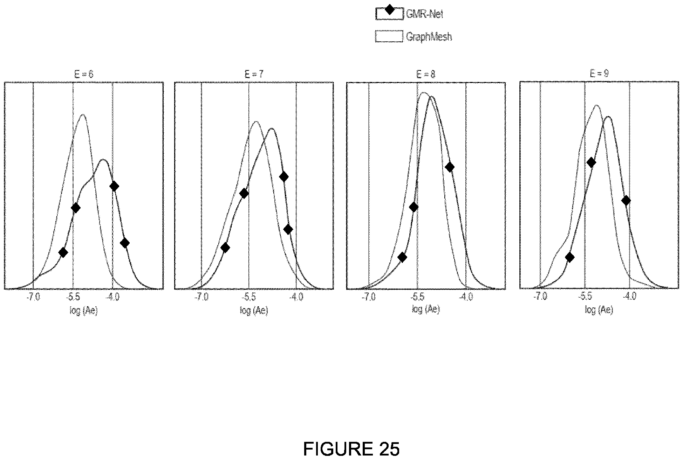

Figure 25 illustrates graphs for quantitative comparisons of simulation errors across a set of 100 unseen meshes, with refined meshes obtained using refinement parameter equal to 0.0084 $*$ max(e). The focus here is on polygons with E ranging from 6 to 9, constituting an in-distribution dataset. Figure 24 is a table containing the average simulation errors based on the data in the Figure 25 plots. The plots in Figure 25 demonstrate the distribution of simulation errors, providing insights into the effectiveness of GraphMesh. Specifically, for E = 6 the average simulation error on GraphMesh refined meshes was approximately 21% smaller than that of GMR-Net refined meshes. Hence, the results highlight GraphMesh's capability to yield accurate refinements while efficiently identifying regions of errors, as also observed in the refinement plots depicted in Figure 22 and Figure 24.

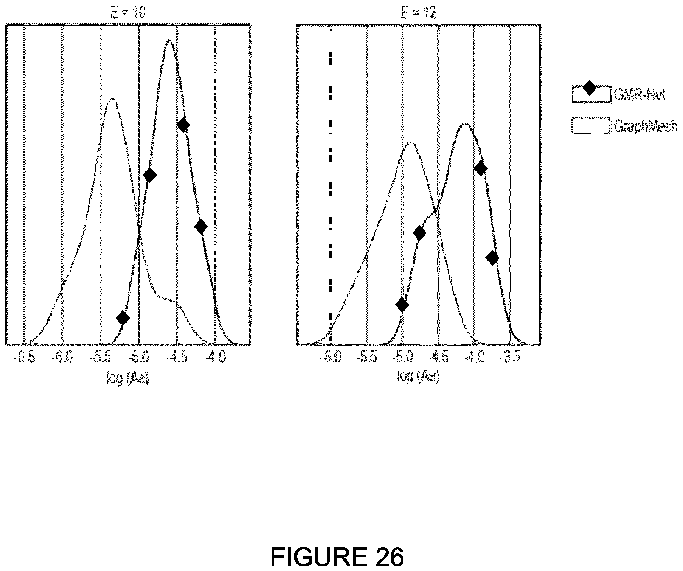

Figure 26 illustrates graphs showing quantitative results for the out-of-distribution dataset, involving polygons with 10 and 12 edges during inference. The results obtained using the GMR-Net method were acquired through a down-sampling technique described above. Figure 23 illustrates the qualitative evaluations, which further support the findings in Figure 26. GraphMesh accurately captures refinement regions, whereas GMR-Net fails to refine certain regions, leading to outcomes closer to a uniformly coarse mesh.

Results - Comparison for various simulation times

Since mesh size depends on the refinement level parameter (β), the simulation time will also depend on β. Therefore, to plot errors at different times, β was varied between 0.0084 * max(e) and 0.01 * max(e) and the corresponding simulation errors were recorded. Figures 27 and 28 illustrate graphs to compare GraphMesh and GMR-Net for both in-distribution and out-of-distribution datasets, in terms of a specific simulation accuracy for varying refinement levels. Each data point on each plot is obtained using the averaged values of simulation time and errors. Figure 27 illustrates a comparative evaluation of mesh optimality between GraphMesh and GMR-Net for the in-distribution dataset whilst Figure 28 illustrates a comparative evaluation of mesh optimality between GraphMesh and GMR-Net for the out-of-distribution dataset.

The results demonstrate that, under each of the 10 refinement levels, GraphMesh outperforms GMR-Net, achieving superior simulation accuracy within a shorter time frame.

Whilst the methods described herein are sometimes described as operating based on 2D meshes, the methods are not limited to 2D meshes and are able to refine 3D meshes. The terms GNN and GCN have been used in the above description. A GCN is a specific type of GNN and may be used as a GNN in the above descriptions.

Some advantages (not limiting) of the methods disclosed herein when compared with the comparative methods 1 and 2 are described herein:

Comparative Method 1: This method simply uses polygon vertices as input to the model, hence if the number of vertices of the polygon is changed, the model trained on polygons with specific vertices cannot be used on another polygons. So this method cannot be generalized over arbitrary 2D shapes because the input shape of the model is different for different geometry and needs retraining for every new shape (with different number of vertices). That is, a crucial limitation of MeshingNet is the lack of the generalization capability to handle a number of edges that are different from those in training data, further the method accommodates only a single dimension for learning the boundary condition with other limited features. Furthermore, spatial information on the connectivity of nodes and elements is not considered

Comparative Method 2: This method uses padding to attempt to solve the problem of generalization for polygons with different number of vertices. The range of padding is from 6 vertices to 9 vertices. Hence it may only be generalized for the shapes which have vertices in the range 6-9 and it cannot be used on the geometries which have polygon vertices more than 9. That is, a major limitation of this method lies in its inability to generalize over geometries characterized by a number of vertices beyond a predefined range. This limitation occurs due the use of a fixed input embedding size for features, with padding employed for accommodating a restricted range of polygonal geometries based on the number of vertices.

More generally, the current landscape of mesh refinement methodologies exhibits limitations in their performance, particularly when faced with tested geometries that deviate from the training set.

Leveraging the capabilities of Graph Neural Networks, methods proposed herein are able to handle polygonal structures with varying numbers of edges, addressing a crucial limitation observed in existing methodologies. An essence of this approach is not only the model's adaptability to diverse polygonal configurations but also its significant impact on enhancing simulation accuracy while concurrently reducing simulation time.

As already described, GMR-Net's (comparative method 2) adaptability is restricted to polygons within a fixed range of vertex counts. The GraphMesh framework addresses this limitation by leveraging GNNs. The introduction of the vertex graph Gnv in GraphMesh allows for handling features from any input geometry, proving especially advantageous for intricate shapes where determining the precise number of edges might be challenging. Beyond generalization, the vertex graph favors learning of the inherent topology of a given polygon. The latent embeddings for each node, obtained through learnable aggregations, provide information about the node's positioning relative to polygon corners, boundaries, and PDE-defined conditions. This information is then used in the main graph, which utilizes the mesh connectivity information to predict nodewise simulation errors effectively. The generalization capabilities of GraphMesh across various datasets, both in-distribution and out-of-distribution, highlight the GraphMesh's improvement compared to GMR-Net under the considered scenarios.

Comparisons that demonstrate the generalization ability and effectiveness of GraphMesh have been shown above (with respect to Figures 22-28). Approximately, in the experiments to obtain these results GraphMesh achieved an improvement in simulation accuracy of 21% with a 27% reduction in simulation time on comparison with GMR-Net.

Elements of the invention may include:

- Geometric generalization of the 2D geometry to generate optimal mesh
- Generated latent embeddings from the geometry as input to represent the structure of the input geometry
- Forming a graph structure using centroids of the mesh elements to learn the latent embeddings of the coarse mesh in a better way

Any of the above mesh-refinement methods may be include use of the refined/optimal mesh for a simulation/modelling task. The simulation or modelling task carried out may include modelling a physical component.

Following are some of the domains where meshing is widely used as a preprocessing step for simulation studies:

- Design of Structures (Buildings, Bridges etc.)
- Automobile Design
- Biomechanics
- Aircraft Design

Any of the above mesh-refinement methods may be include using the refined mesh to model a physical component of any of a building, an automobile, a biomechanical or physiological system, and an aircraft.

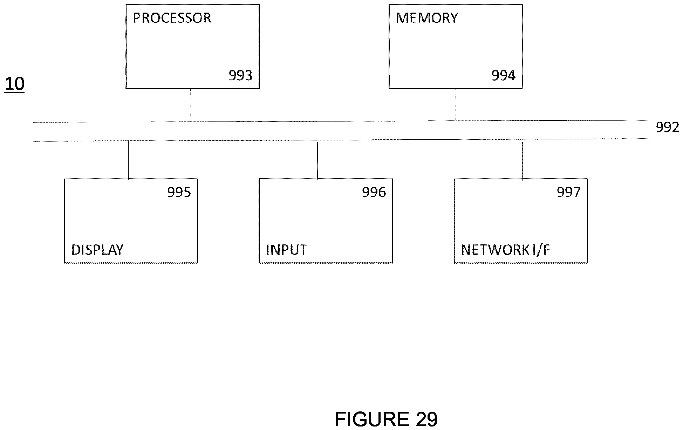

Figure 29 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps or operations described above, e.g. any of steps S31-S43, S71-S78, S81-S85, S51-S55, S91-S94, S191-S196, and S291-S295.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps or operations described above, e.g. any of steps S31-S43, S71-S78, S81-S85, S51-S55, S91-S94, S191-S196, and S291-S295. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store meshes and/or data of meshes and/or graphs and/or graph data and/or values of parameters (e.g. thresholds/β/PDE parameters, etc.) and/or nodal features and/or geometric features and/or GNN weights/features and/or simulation errors and/or loss values and/or input data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as a representation of a mesh and/or geometry and/or component and/or graph and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 29. Such a computing device need not have every component illustrated in Figure 29, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:

    generating a main graph based on a coarse mesh, the coarse mesh comprising a plurality of mesh elements arranged to fill an area or volume defined by a geometry;
    generating a vertex graph based on the geometry, wherein the vertex graph comprises vertex graph nodes corresponding to vertices of the area or volume defined by the geometry and vertex graph edges corresponding to links between the vertices in the geometry;
    generating, using a first graph neural network (GNN), an embedding of the vertex graph;
    generating, using a second GNN and based on the main graph and the embedding of the vertex graph, a prediction indicative of a refinement of the coarse mesh for generating a refined mesh.

2. The computer-implemented method as claimed in claim 1, wherein the prediction comprises a predicted error and wherein the computer-implemented method further comprises comparing the predicted error to a ground truth error and adjusting at least one weight of the first and/or second GNN based on the comparison, wherein the ground truth error comprises an error between a simulation result obtained using the coarse mesh and a simulation result obtained using a fine mesh.

3. The computer-implemented method as claimed in claim 2, wherein the first and second GNNs after having at least one weight adjusted are trained first and second GNNs, and wherein the computer-implemented method further comprises:

    generating a target main graph based on a target coarse mesh, the target coarse mesh comprising a plurality of mesh elements arranged to fill an area or volume defined by a geometry;
    generating a target vertex graph based on the geometry, wherein the target vertex graph comprises vertex graph nodes corresponding to vertices of the area or volume defined by the geometry and vertex graph edges corresponding to links between the vertices in the geometry;
    generating, using the trained first GNN, an embedding of the target vertex graph;
    generating, using the trained second GNN and based on the target main graph and the embedding of the target vertex graph, a prediction indicative of a refinement of the target coarse mesh for generating a refined mesh; and
    refining the target coarse mesh based on the prediction to obtain the refined mesh.

4. The computer-implemented method as claimed in claim 1, further comprising refining the coarse mesh based on the prediction to obtain a refined mesh.

5. The computer-implemented method as claimed in claim 3 or claim 4, further comprising using the refined mesh to model a physical component.

6. The computer-implemented method as claimed in any of the preceding claims, wherein the coarse mesh comprises coarse mesh nodes and coarse mesh edges defining the elements of the coarse mesh and wherein generating the vertex graph comprises generating a per-node vertex graph per coarse mesh node, wherein each per-node vertex graph comprises a plurality of per-node vertex graph nodes corresponding respectively to the vertices.

7. The computer-implemented method as claimed in claim 6, wherein each per-node vertex graph node comprises geometric information relating to the coarse mesh node corresponding to the per-node vertex graph and the vertex corresponding to the per-node vertex graph node, and wherein the geometric information comprises at least one of:

mean value coordinates of the vertex concerned for the coarse mesh node concerned;
a number of hops between the vertex concerned and the coarse mesh node concerned;
the vertex closest to the coarse mesh node concerned among the vertices;
boundary condition information for the vertex concerned;
parameters related to a simulation for which the refined mesh is to be used.

8. The computer-implemented method as claimed in any of the preceding claims, wherein the first and/or second GNN comprises at least one multi-layer perceptron layer and wherein the second GNN comprises a residual-layers-based architecture.

9. The computer-implemented method as claimed in claim 2 or claim 3, wherein comparing the predicted error to the ground truth error comprises computing a loss between on the predicted error and the ground truth error, and wherein adjusting the at least one weight of the first and/or second GNN based on the comparison comprises adjusting the at least one weight to reduce the loss.

10. The computer-implemented method as claimed in claim 9, wherein the prediction comprises a per-node predicted error per coarse mesh node of the coarse mesh.

11. The computer-implemented method as claimed in claim 10, wherein the ground truth error comprises a per-node ground truth error per coarse mesh node of the coarse mesh.

12. The computer-implemented method as claimed in claim 11, wherein computing the loss comprises computing an average of per-node losses between corresponding per-node predicted errors and per-node ground truth errors.

13. The computer-implemented method as claimed in claim 2 or claim 3, comprising obtaining the ground truth error by performing a simulation using the coarse mesh and performing a simulation using the fine mesh, and comparing results of the simulations to determine the error between the results of the simulations.

14. A computer program which, when run on a computer, causes the computer to carry out a method comprising:

generating a main graph based on a coarse mesh, the coarse mesh comprising a plurality of mesh elements arranged to fill an area or volume defined by a geometry;
generating a vertex graph based on the geometry, wherein the vertex graph comprises vertex graph nodes corresponding to vertices of the area or volume defined by the geometry and vertex graph edges corresponding to links between the vertices in the geometry;
generating, using a first graph neural network (GNN), an embedding of the vertex graph;
generating, using a second GNN and based on the main graph and the embedding of the vertex graph, a prediction indicative of a refinement of the coarse mesh for generating a refined mesh.

15. An information processing apparatus comprising a memory and a processor connected to the memory, wherein the processor is configured to:

generate a main graph based on a coarse mesh, the coarse mesh comprising a plurality of mesh elements arranged to fill an area or volume defined by a geometry;
generate a vertex graph based on the geometry, wherein the vertex graph comprises vertex graph nodes corresponding to vertices of the area or volume defined by the geometry and vertex graph edges corresponding to links between the vertices in the geometry;
generate, using a first graph neural network (GNN), an embedding of the vertex graph;
generate, using a second GNN and based on the main graph and the embedding of the vertex graph, a prediction indicative of a refinement of the coarse mesh for generating a refined mesh.

Coarse Mesh — Fine Mesh — Optimal Mesh

FIGURE 1

FIGURE 2

FIGURE 3

FIGURE 4

FIGURE 5

FIGURE 6

FIGURE 7

FIGURE 8

S71 | Generate training data (coarse mesh, fine mesh, simulation error)

S72 | Obtain ground truth simulation errors

S73 | Load input data (vertex graph and main graph)

S74 | Message passing & graph pooling on vertex graph

S75 | Message passing & graph pooling on main graph

S76 | Predict simulation error

S77 | Compute loss/error

S78 | Is error merged?

no

yes

End

FIGURE 9

| S81 | Generate testing data (coarse mesh, fine mesh) |

| S82 | Use trained GNN model to predict simulation error for coarse mesh |

| S83 | Compute loss/error on test data |

| S84 | Compute optimal lengths |

| S85 | Generate optimal mesh using mesh refiner to check refinement level |

FIGURE 10

**Training demonstrated on one example**

(No. Nodes x Feature size)  (2 x No. of Edges)
Vertex Graph Data (X = [**b** x 5], edge_id = [2 x **b**])

**Training Coarse Mesh** ⇨ [ Vertex Graphs → GCN -1 → Latent Embedding

Backpropagation

Main Graph → GCN -2 ⇨ Predictions ⇨ Loss

(No. Nodes x Feature size)  (2 x No. of Edges)
Main Graph Data (X = [**a** x latent_dim], edge_id = [2 x **c**])

**Testing demonstrated on one example**

(No. Nodes x Feature size)  (2 x No. of Edges)
Vertex Graph Data (X = [**n** x 5], edge_id = [2 x **n**])

**Testing Coarse Mesh** ⇨ [ Vertex Graphs → Trained GCN -1 → Latent Embedding

Main Graph → Trained GCN -2 ⇨ Predictions

(No. Nodes x Feature size)  (2 x No. of Edges)
Main Graph Data (X = [**m** x latent_dim], edge_id = [2 x **p**])

FIGURE 11

FIGURE 12

**Mesh Refinement**

Input
Coarse Mesh

Trained Model

Predictions

Mesh Refiner

Output
Optimal Mesh

FIGURE 13

Layer 1

$x_1 [1 \times 2]$
⋮
$x_6 [1 \times 2]$ } Averaging ⇨ $x_i^1 [1 \times 2]$ ⇨ MLP ⇨ $x_i^1 [1 \times hid\_dim]$ ⟍ 6 Nodes

Layer 2

$x_1^1 [1 \times hid\_dim]$
⋮
$x_6^1 [1 \times hid\_dim]$ } Averaging ⇨ $x_i^2 [1 \times hid\_dim]$ ⇨ MLP ⇨ $x_i^2 [1 \times hid\_dim]$

Layer n

$x_1^{n-1} [1 \times hid\_dim]$
⋮
$x_6^{n-1} [1 \times hid\_dim]$ } Averaging ⇨ $x_i^n [1 \times hid\_dim]$ ⇨ MLP ⇨ $x_i^n [1 \times hid\_dim]$ ⇨

(No. Nodes x Feature size)   (2 x No. of Edges)

Data (X = [6 x 5], edge_id = [2 x 6])

Data (X = [6 x 5], edge_id = [2 x 6])

FIGURE 14

**Displacement Boundary Condition**

Displacement on Boundaries
$$u_1, u_2 \dots \dots u_6 \neq 0$$

Vertex Graph with node features

# FIGURE 15

FIGURE 16

FIGURE 17

S91 | Generate main graph based on coarse mesh

S92 | Generate vertex graph based on geometry

S93 | Generate, using first GNN, embedding of vertex graph

S94 | Generate, using second GNN and based on the embedding and the main graph, a prediction indicative of a refinement of the coarse mesh

FIGURE 18

S191 | Generate main graph based on coarse mesh

S192 | Generate vertex graph based on geometry

S193 | Generate, using first GNN, embedding of vertex graph

S194 | Generate, using second GNN and based on the embedding and the main graph, a prediction indicative of a refinement of the coarse mesh

S195 | Compare prediction with ground truth error

S196 | Adjust weights based on comparison

# FIGURE 19

| S291 | Generate main graph based on coarse mesh |
| S292 | Generate vertex graph based on geometry |
| S293 | Generate, using first GNN, embedding of vertex graph |
| S294 | Generate, using second GNN and based on the embedding and the main graph, a prediction indicative of a refinement of the coarse mesh |
| S295 | Refine coarse mesh based on the prediction to obtain refined mesh |

FIGURE 20

# FIGURE 21

(a) (b) (c)

(d) (e) (f)

GMR-Net    GraphMesh    Simulation Error Distribution

FIGURE 22

FIGURE 23

| Metric | Method | E = 6 | E = 7 | E = 8 | E = 9 |
|---|---|---|---|---|---|
| Average Simulation Error | GMR-Net | 0.0063 | 0.0051 | 0.0055 | 0.0062 |
| | GraphMesh | **0.005** | **0.0044** | **0.0046** | **0.0051** |
| Average Simulation Time (s) | GMR-Net | 0.0065 | 0.0073 | 0.0075 | 0.0076 |
| | GraphMesh | **0.0047** | **0.0055** | **0.0059** | **0.0060** |

FIGURE 24

FIGURE 25

FIGURE 26

FIGURE 27

FIGURE 28

10

FIGURE 29

Europäisches
Patentamt

European
Patent Office

Office européen
des brevets

## EUROPEAN SEARCH REPORT

**Application Number**

EP 24 20 5831

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kanfar Rayan: "Learning Mesh-Based Flow Simulations on Graph Networks", Stanford CS224W: Machine Learning with Graphs ¦ Medium, 9 February 2022 (2022-02-09), pages 1-37, XP093257859, Stanford Retrieved from the Internet: URL:https://medium.com/stanford-cs224w/learning-mesh-based-flow-simulations-on-graph-networks-44983679cf2d * abstract * * section 3, 3.1-3.3, A.3 * * figure 1 * | 1-15 | INV. G06T17/20 |
| X | KIM MINSEONG ET AL: "GMR-Net: GCN-based mesh refinement framework for elliptic PDE problems", ENGINEERING WITH COMPUTERS, vol. 39, no. 5, 30 March 2023 (2023-03-30), pages 3721-3737, XP093257854, GB ISSN: 0177-0667, DOI: 10.1007/s00366-023-01811-0 Retrieved from the Internet: URL:https://link.springer.com/article/10.1007/s00366-023-01811-0/fulltext.html> * abstract * * sections 3, 3.1, 3.1.2, 3.1.6 * * figures 1, 3, 4, 5 * | 1-15 | TECHNICAL FIELDS SEARCHED (IPC)  G06T |

-/--

The present search report has been drawn up for all claims

| Place of search | Date of completion of the search | Examiner |
|---|---|---|
| Berlin | 11 March 2025 | Kröner, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 20 5831

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | KHAN AINULLA ET AL: "GraphMesh: Geometrically Generalized Mesh Refinement Using GNNs", 28 June 2024 (2024-06-28), COMPUTATIONAL SCIENCE - ICCS 2024; [LECTURE NOTES IN COMPUTER SCIENCE; LECT.NOTES COMPUTER], SPRINGER NATURE SWITZERLAND, CHAM, PAGE(S) 120 - 134, XP047702747, ISSN: 0302-9743 ISBN: 978-3-031-63774-2 [retrieved on 2024-06-28] * abstract * * sections 3.1, 3.3, 3.4 * * figure 1 * | 1-15 | |

-----

**TECHNICAL FIELDS SEARCHED (IPC)**

The present search report has been drawn up for all claims

| Place of search | Date of completion of the search | Examiner |
|---|---|---|
| Berlin | 11 March 2025 | Kröner, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABDELAZIZ Y.** ; **NABBOU A.** ; **HAMOUINE A.** A state-of-the art review of the x-fem for computational fracture mechanics. *Applied Mathematical Modelling*, 2009, vol. 33, 4269-4282
- MeshingNet: a new mesh generation method based on deep learning. **ZHANG Z et al.** International conference on computational science. Springer, 2020, 186-198
- **SHEWCHUK, J.R.** Delaunay refinement algorithms for triangular mesh generation. *Computational geometry*, 2002, vol. 22 (1-3), 21-74
- **MINSEONG K. et al.** GMR-Net: GCN-based mesh refinement framework for elliptic PDE problems. *Engineering with Computers*, 2023, vol. 39, 3721-3737
- **GEUZAINE C.** ; **REMADE F.** Gmsh: a three-dimensional finite element mesh generator with built-in pre- and post-processing facilities. *International Journal for Numerical Methods in Engineering*, 2009, vol. 79, 1309-1331
- **HECHT F.** New development in FreeFem++. *Journal of Numerical Mathematics*, 2012, vol. 20, 251-266
- **FLOATER M.S.** Mean value coordinates. *Computer Aided Geometric Design*, 2003, vol. 20, 19-27
- **KIPF T.N.** ; **WELLING M.** Semi-supervised classification with graph convolutional networks. *International conference on learning representations*, 2017
- **PASZKE A. et al.** PyTorch: an imperative style, high performance deep learning library. *Advances in neural information processing systems*, 2019
- **FEY M.** ; **LENSSEN J.E.** Fast graph representation learning with PyTorch. *ICLR workshop on representation learning on graphs and manifolds*, 2019
- **KINGMA D.P.** ; **BA J.** Adam: a method for stochastic optimization. *International conference on learning representations*, 2015